Europäisches Patentamt

European Patent Office

Office européen des brevets

(19)

(11) **EP 0 921 686 A1**

(12) **EUROPEAN PATENT APPLICATION**
published in accordance with Art. 158(3) EPC

(43) Date of publication:
   **09.06.1999 Bulletin 1999/23**

(51) Int. Cl.$^6$: **H04N 7/30**

(21) Application number: **98928597.8**

(86) International application number:
   **PCT/JP98/02755**

(22) Date of filing: **19.06.1998**

(87) International publication number:
   **WO 98/59495 (30.12.1998 Gazette 1998/52)**

(84) Designated Contracting States:
   **DE FR GB**

(30) Priority: **20.06.1997 JP 16471997**
   **08.10.1997 JP 27602497**

(71) Applicant: **Sony Corporation**
   **Tokyo 141-0001 (JP)**

(72) Inventor: **FUKUHARA, Takahiro**
   **Shinagawa-ku, Tokyo 141-0001 (JP)**

(74) Representative:
   **Pilch, Adam John Michael et al**
   **D. YOUNG & CO.,**
   **21 New Fetter Lane**
   **London EC4A 1DA (GB)**

(54) **DEVICE AND METHOD FOR ITERATIVE CONVERSION ENCODING OF IMAGES, DEVICE AND METHOD FOR ITERATIVE CONVERSION DECODING OF IMAGES, AND PROVIDING MEDIUM**

(57)    An inputted original image 100 is divided to a second block image by a second block generating section 2, and a second feature quantity is extracted by a second feature quantity extracting section 6. The second block image and the second feature quantity are stored in an image memory section 3. A control section 15 reads out, from the image memory section 3, only a block image having the same feature quantity as the feature quantity of a first block image from a first feature quantity extracting section 5, and transform processing is carried out by an image transforming and generating section 7 so as to send a block image 107 after trans-

form to an approximate block search section 4. The approximate block search section 4 takes matching between the first block image 101 and the block image 107 after transform, and searches for a block image which realizes the minimum error between these block images. The approximate block search section 4 then selects and sends the block image to a coding and multiplexing section 9. Thus, in iterated image transform coding and decoding, a high coding efficiency can be maintained to provide an image of higher quality while approximate block search is carried out at a high speed.

FIG.3

## Description

Technical Field

This invention relates to iterated image transform coding device and method, image decoding device and method, and a providing medium which can be used in a system for carrying out efficient transmission or storage of images.

Background Art

As a typical conventional image compression system, the so-called JPEG (Joint Photographic Coding Experts Group) system standardized by ISO has been known. This JPEG system employs DCT (discrete cosine transform) and provides satisfactory coded or decoded images in the case where a relatively large number of bits are allocated. However, if the number of coding bits is reduced to a certain extent, block distortion proper to DCT becomes conspicuous and deterioration is subjectively increased.

Meanwhile, an image compression system utilizing the iterated function system (IFS) is beginning to be noted recently. This system uses self-similarity of image on the assumption that in the case where a portion of an entire image is extracted, another image similar to the extracted image exists with a different size in the image. In this iterated function system, block distortion as in the above-mentioned JPEG does not become conspicuous, and the self-similarity between blocks of difference sizes within an image is used. Therefore, the system has such an advantage that decoding does not depend on the resolution. This iterated transform coding is also referred to as fractal coding and is expected to be applied to various fields.

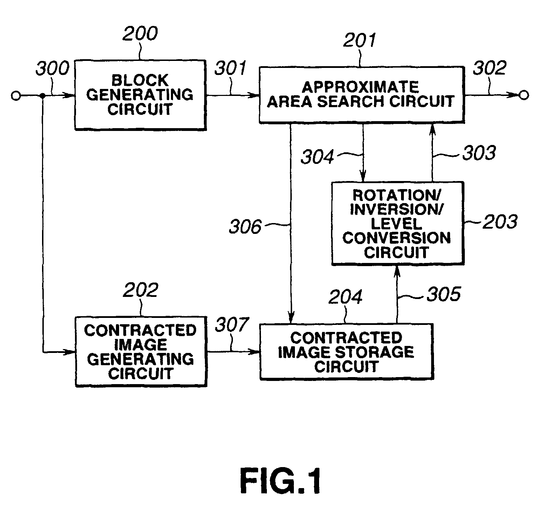

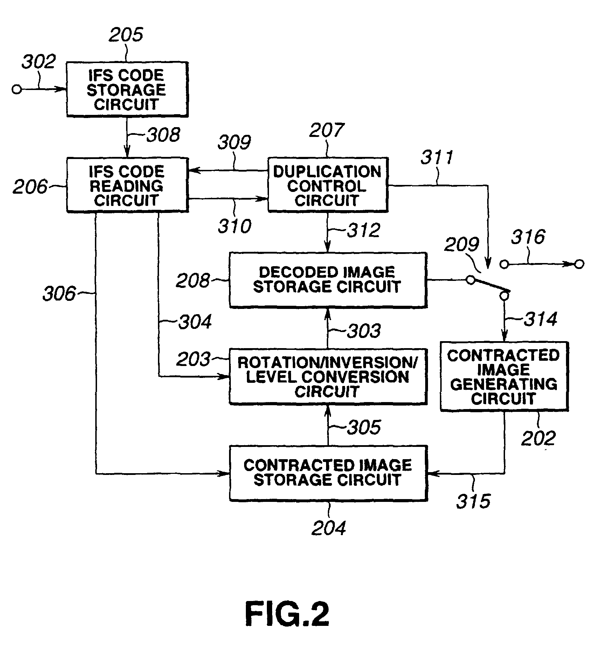

The basic configuration of the above-described iterated transform coding is described in an article written by Arnaud E. Jacquin, "Image coding based on a fractal theory of iterated contractive image transformations," IEEE Transactions on Image Processing, Vol.1, No.1, pp.18-30. Fig.1 shows an iterated transform coding device described in this article, and Fig.2 shows an iterated transform decoding device.

First, the iterated transform coding device will be described with reference to Fig.1.

An original image 300 supplied to the iterated transform coding device of Fig.1 is inputted to a block generating circuit 200 through an input terminal and is divided into a plurality of blocks 301. These blocks are set to avoid overlapping one another. A contracted image 307 formed by contracting the original image 300 by a contracted image generating circuit 202 is stored in a contracted image storage circuit 204. With respect to the divided blocks 301, an approximate area search circuit 201 searches for contracted images from the contracted image storage circuit 204 by full search, and detects the most approximate contracted image from these images. Approximate block position information 306 indicating a portion to be extracted from the contracted image, thus obtained, is transmitted to the contracted image storage circuit 204 and a contracted image 305 of a designated area is taken out. Subsequently, rotation, inversion, and level conversion of the contracted image 305 of the designated area are carried out by a rotation/inversion/level conversion circuit 203 in accordance with a transform parameter 304, and a contracted image 303 after transform is outputted. As a result, the transform parameter 304 and the approximate block position information 306 are outputted as an IFS (iterated function system) code 302.

Next, the iterated transform decoding device will be described with reference to Fig.2.

The IFS code 302 outputted from the iterated transform coding device of Fig.1 is once inputted and stored in an IFS code storage circuit 205, and is sequentially read out from the IFS storage circuit 205 block by block over a plurality of times. An IFS code reading circuit 206 reads out a block-by-block IFS code 308, and splits the IFS code into approximate block position information 306 and a transform parameter 304. Then, the approximate block position information 306 is inputted to a contracted image storage circuit 210, and a contracted image 305 of a designated area in the contracted image is taken out in accordance with the approximate block position information 306. On this contracted image 305 of the designated area, transform processing based on the transform parameter 304 is carried out by a rotation/inversion/level conversion circuit 203. The transformed contracted image is added and duplicated to a decoded image in a decoded image storage circuit 208, and is stored therein. On completion of reading of the IFS codes 308 of all the blocks, the IFS code reading circuit 206 sends a read completion notification signal 310 to a duplication control circuit 207. The duplication control circuit 207 counts the number of times the series of duplication processing is carried out. If the counted number has not reached a pre-set value, the duplication control circuit 207 outputs a rereading designation signal 309 to the IFS code reading circuit 206, and the above-described duplication processing is carried out again with respect to all the blocks in the image. At the same time, the duplication control circuit 207 sends a decoded image output control signal 311 indicating reprocessing designation information, and a decoded image 313 is connected to an input 314 of a contracted image generating circuit 202 by a switch 209. The contracted image generating circuit 202 generates a contracted image 315 in the same manner as in the encoder, thus rewriting the contents of the image stored in the contracted image storage circuit 204. On the other hand, when the number of times of the duplication processing has reached the pre-set number, the duplication control circuit 207 sends a decoded image output control signal 311 indicating designation of end, and the decoded image 313 is connected to an ultimate output image 316 by the switch 209, thus providing an output of the decoder.

In the example of the conventional technique as described above, the approximation degree with respect to an image obtained by contracting and transforming a block located at an arbitrary position in the screen itself is measured, and position information of the most approximate block and the transform parameter at that time are selected from all the possible candidates. Therefore, a very long search time is required.

Also, in the conventional coding system using iterated transform, the coding performance depends on the characteristics of images. The coding efficiency is high in the case of an image having high self-similarity, but it depends on the characteristics of the image. Thus, in order to realize a high coding efficiency to a certain degree with respect to any image, it is considered to use a different coding system for a block having low self-similarity.

Disclosure of the Invention

In view of the foregoing status of the art, it is an object of the present invention to provide iterated image transform coding device and method, decoding device and method, and a recording medium which enable reduction in the above-described time for searching for the approximate block and realization of a high coding efficiency with respect to all the images as described above.

In order to solve the foregoing problem, an iterated image transform coding device according to the present invention, adapted for carrying out iterated transform coding of an image, includes: a block generating section for dividing an input image into first and second block images; a feature quantity extracting section for extracting the feature quantities of the generated first and second block images; a memory for storing the second block image and the feature quantity thereof; a control section for carrying out control to read out, from the memory, a second block image having a feature quantity with a similarity degree not lower than a predetermined level with respect to the feature quantity of a noted first block image; an image transforming and generating section for carrying out predetermined transform processing on the second block image read out from the memory; an approximate block search section for searching for a block image most approximate to the noted first block image from block images after transform on which predetermined transform processing has been carried out; and a coding section for coding data indicating the block position of the block image most approximate to the noted first block image and a transform parameter indicating the predetermined transform processing.

An iterated image transform coding method according to the present invention, adapted for carrying out iterated transform coding of an image, includes the steps of: dividing an input image to generate first and second block images; extracting the feature quantities of the generated first and second block images; storing the second block image and the feature quantity of the second block image into a memory; reading out, from the memory, a second block image having a feature quantity with a similarity degree not lower than a predetermined level with respect to the feature quantity of a noted first block image; carrying out predetermined transform processing on the second block image read out from the memory; searching for a block image most approximate to the noted first block image from block images after transform on which predetermined transform processing has been carried out; and coding data indicating the block position of the block image most approximate to the noted first block image and a transform parameter indicating the predetermined transform processing.

In the iterated image transform coding device and method, the first block image and the second block images are redivided. Also, transform processing including at least one of rotation, translation, and contraction is carried out on the second block image read out from the memory. Also, vector quantization is carried out on the first block image, and the most approximate block image obtained by search and the block image on which vector quantization has been carried out are compared with each other, thus selecting the block image more approximate to the first block image. Moreover, resolution conversion is carried out on the input image, and the image on which resolution conversion has been carried out is divided into first and second block images.

In iterated image transform decoding device and method according to the present invention, in carrying out iterated transform decoding of image data coded by iterated transform coding, coded data including data coded by iterated transform coding and constituted by block information indicating the block position and a transform parameter is received, and a transform source block is reproduced on the basis of the block information, thus reproducing a block located at a predetermined position. Then, transform processing corresponding to the transform parameter is carried out on the reproduced block to generate a block image, and operation to reproduce the block and operation to carry out the transform processing are repeated for a predetermined number of times, thus outputting an ultimately generated decoded image.

In this case, the coded data includes selection information indicating different coding systems and a quantization index. A block image corresponding to the quantization index is de-quantized with reference to a code book, and the block image decoded by iterated transform decoding and the de-quantized block image are selectively outputted on the basis of the selection information. Also, transform processing including at least one of rotation, translation, and contraction is carried out on the block image. In addition, a predetermined block is selected from the reproduced blocks, and only the selected block is decoded by iterated transform decoding. In the iterated transform decoding process, the convergence degree of the image by each block is found, and iterated transform decoding is ended with respect to a block having a convergence degree that has reached a predetermined convergence degree. Moreover, resolution restoration is carried out with respect to the data coded by iterated transform coding.

A providing medium according to the present invention, adapted for providing image data coded by iterated transform coding, is supplied with coded data. The coded data is generated by: dividing an input image to generate first and second block images; extracting the feature quantities of the generated first and second block images; storing the second block image and the feature quantity of the second block image into a memory; reading out, from the memory, a second block image having a feature quantity with a similarity degree not lower than a predetermined level with respect to the feature quantity of a noted first block image; carrying out predetermined transform processing on the second block image read out from the memory; searching for a block image most approximate to the noted first block image from block images after transform on which predetermined transform processing has been carried out; and coding data indicating the block position of the block image most approximate to the noted first block image and a transform parameter indicating the predetermined transform processing.

A program providing medium according to the present invention is adapted for providing a program for carrying out iterated transform coding of an image. The program includes: a step of dividing an input image to generate first and second block images; a step of extracting the feature quantities of the generated first and second block images; a step of storing the second block image and the feature quantity of the second block image into a memory; a step of reading out, from the memory, a second block image having a feature quantity with a similarity degree not lower than a predetermined level with respect to the feature quantity of a noted first block image; a step of carting out predetermined transform processing on the second block image read out from the memory; a step of searching for a block image most approximate to the noted first block image from block images after transform on which predetermined transform processing has been carried out; and a step of coding data indicating the block position of the block image most approximate to the noted first block image and a transform parameter indicating the predetermined transform processing.

Another program providing medium according to the present invention is adapted for providing a program for carrying out iterated transform decoding of image data coded by iterated transform coding. The program includes: a step of receiving coded data including data coded by iterated transform coding and constituted by block information indicating the block position and a transform parameter; a step of reproducing a transform source block on the basis of the block information, thus reproducing a block located at a predetermined position; a step of carrying out transform processing corresponding to the transform parameter on the reproduced block to generate a block image; and a step of repeating operation to reproduce the block and operation to carry out the transform processing for a predetermined number of times, thus outputting an ultimately generated decoded image.

Brief Description of the Drawings

Fig.1 is a block diagram showing an example of the structure of a conventional iterated image transform coding device.

Fig.2 is a block diagram showing an example of the structure of a conventional iterated image transform decoding device.

Fig.3 is a block diagram showing the schematic structure of an iterated image transform coding device as a first embodiment of the present invention.

Fig.4 illustrates mapping transform between a domain block and a range block.

Fig.5 shows the state where a block having a size of M×N is divided into subblocks having a size of k×k.

Fig.6 is a flow chart for explaining operation procedure for extracting the feature quantity of a domain block.

Fig.7 is a flow chart for explaining operation procedure for extracting the feature quantity of a range block and reading from an image memory section.

Figs.8A and 8B are block diagrams showing exemplary structures for quantization and Huffman coding of contrast and offset value.

Fig.9 is a block diagram showing the schematic structure of an iterated transform decoding device corresponding to the iterated transform coding device of Fig.3.

Fig.10 is a block diagram showing the schematic structure of an iterated image transform coding device as a second embodiment of the present invention.

Fig.11 is a block diagram showing the schematic structure of a modification of the second embodiment of Fig.10.

Fig.12 shows an example of division of the block size.

Fig.13 is a block diagram showing the schematic structure of an iterated image transform coding device as a third embodiment of the present invention.

Fig.14 is a block diagram showing the schematic structure of an iterated image transform coding device used for explaining the third embodiment of the present invention.

Fig.15 is a block diagram showing the schematic structure of an iterated image transform decoding device as a fourth embodiment of the present invention.

Fig.16 is a block diagram showing the schematic structure of an iterated image transform coding device used for explaining the embodiment of the present invention.

Fig.17 is a block diagram showing the schematic structure of an iterated image transform coding device as a fifth embodiment of the present invention.

Fig.18 is a block diagram showing the schematic structure of an iterated image transform coding device as a sixth embodiment of the present invention.

Fig.19 is a block diagram showing the schematic structure of an iterated image transform decoding device as a seventh embodiment of the present invention.

Fig.20 is a block diagram showing the schematic structure of an iterated image transform decoding device as an eighth embodiment of the present invention.

Fig.21 is a flowchart for explaining operation of the eighth embodiment of Fig.20.

Fig.22 is a block diagram showing the schematic structure of an iterated image transform decoding device as a ninth embodiment of the present invention.

Best Mode for Carrying Out the Invention

Preferred embodiments of the present invention will now be described with reference to the drawings.

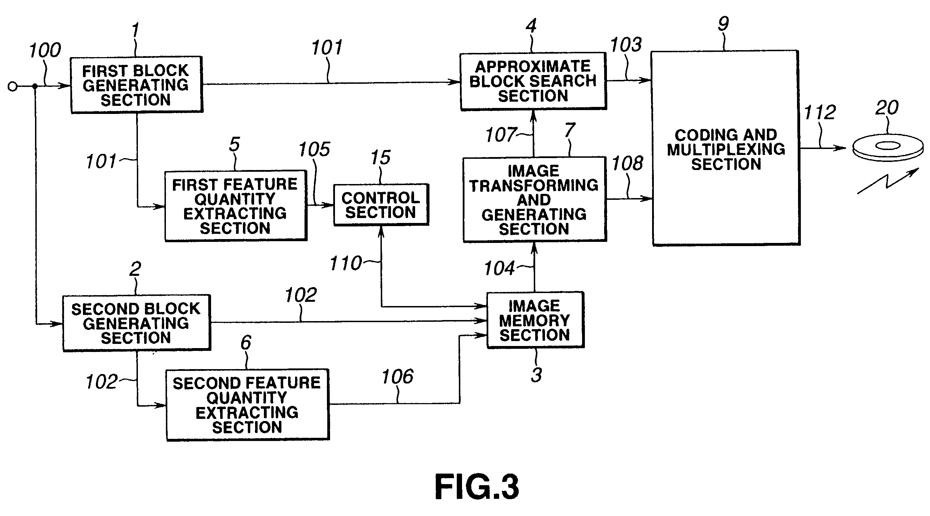

Fig.3 is a block diagram showing the schematic structure of an iterated image transform coding device as a first embodiment of the present invention.

The iterated transform coding device shown in Fig.3 includes a first block generating section 1 and a second block generating section 2 for carrying out block division of an input image, and a first feature quantity extracting section 5 and a second feature quantity extracting section 6 for extracting the feature quantities of block images generated by the respective block generating sections. The iterated transform coding device also includes an image memory section 3 in which the second block images and the feature quantity thereof are multiplexed and stored for one screen, a control section 15 for carrying out control to read out a second block image having the same feature quantity as the feature quantity of the first block image from the image memory section 3, an image transforming and generating section 7 for carrying out predetermined transform processing on the second block image thus read out, an approximate block search section 4 for searching for a block image most approximate to the first block image, and a coding and multiplexing section 9 for coding, multiplexing and then transmitting the block number and transform parameter.

Next, operation of the device will be described.

In Fig.3, an original image 100 inputted through an input terminal is inputted to the first block generating section 1 and the second block generating section 2, where the original image 100 is divided into a plurality of blocks constituting a screen. The second block generating section 2 divides the whole screen into a plurality of blocks having a specified size, before block generating operation is carried out by the first block generating section 1. As a matter of convenience, it is assumed that the block size of the second block is M×N. The resultant second block image information 102 is inputted to the second feature quantity extracting section 6, where a second feature quantity 106 is extracted and outputted. The block image information 102 includes block position information as well as pixel information constituting the block image. A specific example of the feature quantity will be later described in detail. Subsequently, the second block image information 102 is multiplexed with the second feature quantity 106, and is stored into the image memory section 3. This series of operation is continued with respect to all the blocks constituting one screen.

After the above-described operation is completed, the first block generating section 1 sequentially reads out blocks from the screen (normally, from the upper left part to the lower right part of the screen). The first feature quantity extracting section 5 extracts the feature quantity 105 of the first block image thus read out, and outputs the feature quantity 105 to the control section 15. The control section 15 outputs information 110 generated by multiplexing the feature quantity 105 of the first block image 101 and a read enable signal to the image memory section 3. Then, the control section 15 controls the image memory section 3 so as to receive the multiplexed information 110, then read out only block image information 104 having the same feature quantity as the feature quantity 105 of the first block image, actually, a feature quantity with a similarity degree not lower than a predetermined range, and output the block image information 104 to the image transforming and generating section 7.

The image transforming and generating section 7 carries out predetermined transform processing such as rotation, translation, expansion, or contraction with respect to the block image information 104, and a block image 107 after transform is outputted to the approximate block search section 4. A specific example of transform processing at this point will be later described in detail. The approximate block search section 4 carries out matching between the first block image 101 and the block image 107 after transform, and searches for and selects a block image which realizes the minimum difference between these block images. The coding and multiplexing section encodes a block number 103 and a transform parameter 108 obtained at this point (for example, by Huffman coding), and then multiplexes resultant code words. The coding and multiplexing section outputs the multiplexed code words as an output of the iterated transform coding device. The multiplexed code words are transmitted through a transmission medium such as a communication network, or are recorded on and then supplied from a recording medium 20 such as an optical disk or a magnetic disk.

The foregoing is the basic operation of the iterated transform coding device as the first embodiment.

Each of the constituent parts will now be described in detail.

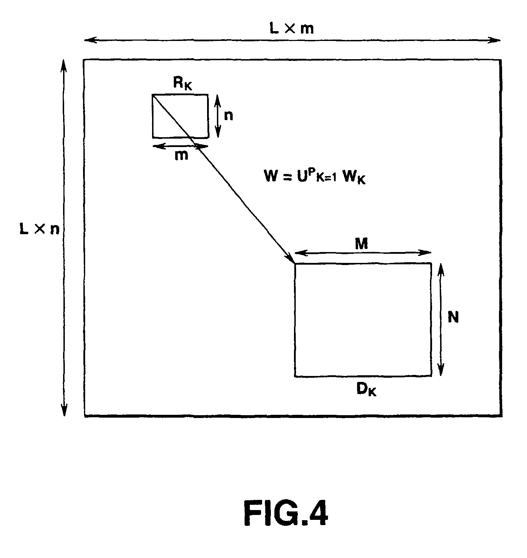

First, the basic theory of iterated transform coding and decoding as a basic technique of the embodiment of the present invention will be described with reference to Fig.4.

Iterated transform coding is a technique for image coding by iteratively carrying out contraction mapping from a domain block to a range block with respect to all the range blocks constituting a screen. At this point, position information of a domain block most approximate to each range block and a transform parameter may be coded.

In Fig.4, a range block $R_k$ is equivalent to the first block image 100, and a domain block $D_k$ is equivalent to the second block image 102. The block size of $R_k$ is $m \times n$ and the block size of $D_k$ is $M \times N$. In Fig.4, $L \times L$ units of range blocks exist in the whole screen. The block sizes of the range block and the domain block are elements largely affected by the coding efficiency, and determination of the block sizes is important.

Block image transform by the image transforming and generating section 7 is transform from $D_k$ to $R_k$. On the assumption that the mapping function to the block $R_k$ is $w_k$ and that the number of domain blocks required for mapping transform of the whole screen is P, an image f is mapped by the mapping function W of the whole image in accordance with the following equation.

$$W(f) = w_1(f) \cup w_2(f) \cup ... \cup w_P(f) \tag{1}$$

Thus, W is expressed by the following equation.

$$W = \cup^P_{k=1} w_k \tag{2}$$

It suffices to converge the mapping function w no matter what mapping function is selected. To secure convergence, contraction mapping is often used in general. In addition, affine transformation is often used for simplifying processing. The case of mapping from $D_k$ to $R_k$ by affine transformation is expressed by the following equation, where $v_i$ is an actual transform function.

$$vi(x, y) = \begin{bmatrix} a_i & b_i \\ c_i & d_i \end{bmatrix} \begin{bmatrix} x \\ y \end{bmatrix} + \begin{bmatrix} e_i \\ f_i \end{bmatrix} \quad ...(3)$$

By this equation (3), all transform processing such as rotation, translation, contraction, and expansion between two blocks can be expressed.

In the above-described example, transform with respect to spatial coordinate of the block is described. However, with respect to the pixel value such as the concentration value like luminance or color-difference information, mapping transform can be similarly carried out by using affine transformation. In this case, for simplification, mapping of a pixel value $d_i$ in the domain block $D_k$ to a pixel value $r_i$ in the range block $R_k$ is carried out in accordance with the following relational expression.

$$v_i(d_i) = s \times d_i + o \tag{4}$$

In this equation, "s" can be defined as contrast and "o" can be defined as offset value. In this case, the parameters s and o that realize the minimum differential square sum of the difference from the pixel value $r_i$ in the range block $R_k$ may be calculated. That is, the parameters s and o may be set to satisfy the following formula.

$$\Sigma(s \times d_i + o - r_i)^2 \rightarrow \text{minimum value} \tag{5}$$

The image transforming and generating section 7 includes a circuit for carrying out transform such as rotation, translation, contraction, and expansion as expressed by the equation (3), and carries out position transfer within the screen with respect to the block image 104 read out from the image memory section 3. In Fig.4, $D_k$ located at a lower right part in the screen is mapped to $R_k$ located at an upper left part in the screen.

A method for transforming the concentration value of pixels in the block can be similarly realized by using affine transformation. By carrying out transform processing on the read-out block image 104 by using several different combinations of transform coefficients ($a_i$, $b_i$, $c_i$, $d_i$, $e_i$, $f_i$) of the equation (3), a plurality of transform block images 107 can be obtained. From these plural transform block images 107, a block image most approximate to the first block image 101 is searched for and detected. As the number of combinations of transform coefficients and the total number of transform coefficients become greater, the number of candidates increases. Therefore, the processing time increases though the compression efficiency is improved.

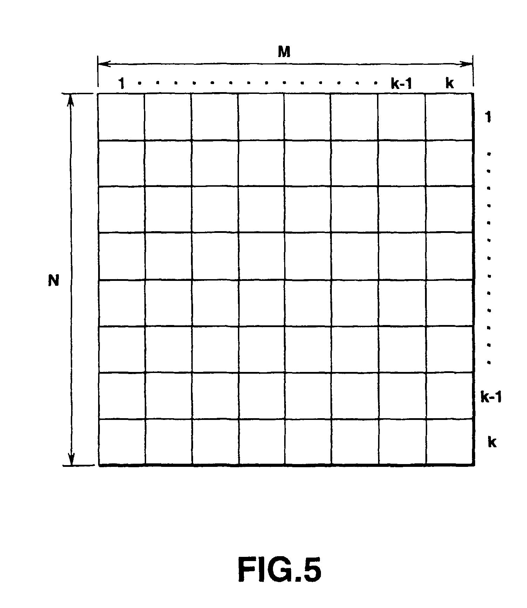

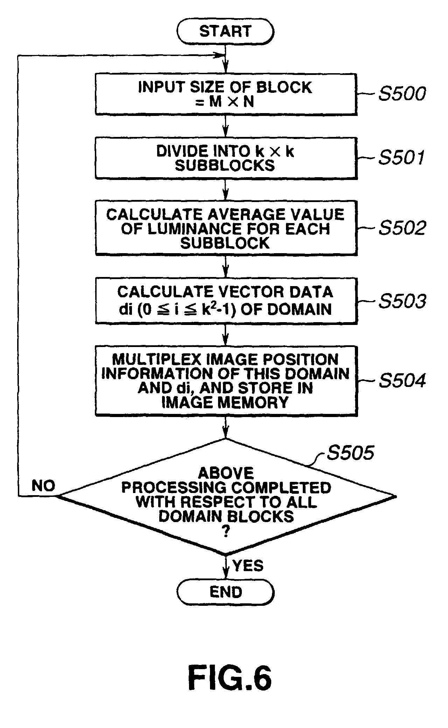

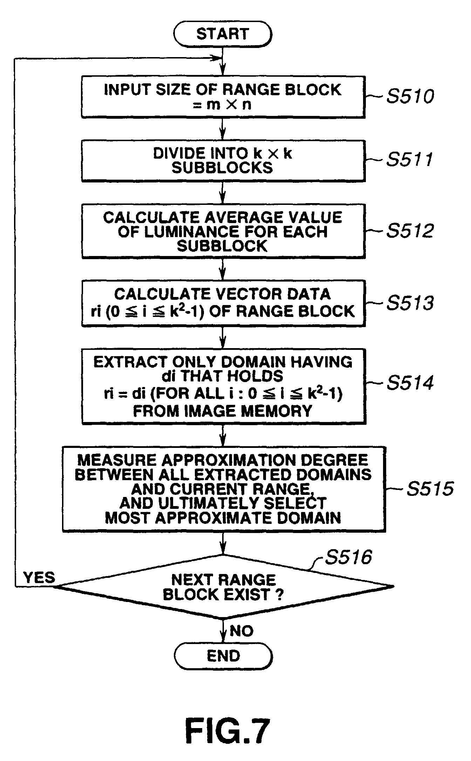

A specific example of operation of the first feature quantity extracting section 5 and the second feature quantity extracting section 6 will now be described with reference to Figs.5, 6 and 7. Fig.5 shows the state where a block having a size of M×N is divided into subblocks having a size of k×k. Fig.6 is a flowchart for explaining operation of the second feature quantity extracting section 6. Fig.7 is a flowchart for explaining operation of the first feature quantity extracting section 5.

First, on the assumption that a domain block of the second block image information 102 generated by the second block generating section 2 is a block having a size of M×N, this domain block having the size of M×N is inputted at the first step S500 of Fig.6. At the next step S501, the block having the size of M×N is divided into subblocks having a size of k×k longitudinally and laterally, as shown in Fig.5. At the next step S502, the average value of luminance value is calculated for each of the divided subblocks. Thus, the block having the size of M×N is caused to have $k^2$ average values, that is, $k^2$-dimensional vector data $d_i$ ($0 \leq i \leq k^2-1$) in accordance with vector expression. At step S503 of Fig.6, the vector data $d_i$ ($0 \leq i \leq k^2-1$) of the domain block having the size of M×N is calculated. Thus, the second block feature quantity 106 found by the second feature quantity extracting section 6 is nothing but the vector data $d_i$. At step S504, the vector data $d_i$ as the second block feature quantity 106 and the image position information of the domain block as the second block image information 102 are multiplexed and then stored in the image memory section 3. At the subsequent step S505, it is discriminated whether or not the above-described processing has been completed with respect to all the domain blocks constituting the screen. If the result is NO, the processing returns to step S500. If the result is YES, the processing ends. The foregoing is the operation of the second block generating section 2 and the second feature quantity extracting section 6. In the above-described example, the average value of the respective subblocks is used for expressing the feature quantity of each subblock. However, the statistic quantity such as dispersion or standard deviation may also be used.

Next, operation of the first block generating section 1 and the first feature quantity extracting section 5 will be described with reference to the flowchart of Fig.7.

In this specific example, it is assumed that the size of the range block of the first block image information generated by the first block generating section 1 is, for example, m×n. At the first step S510 of Fig.7, this range block having the size of m×n is inputted, and at step S511, the range block is divided into k×k subblocks similarly to the case of the domain block. At the next step S512, the average value of luminance is calculated for each subblock. At step S513, vector data $r_i$ ($0 \leq i \leq k^2-1$) of the range block is calculated. Then, at step S514, all the domain blocks satisfying

$$r_i = d_i \text{ (for all } i: 0 \leq i \leq k^2-1)$$

are extracted from the domain block vector data $d_i$ ($0 \leq i \leq k^2-1$) stored in the image memory section 3. With the extracted domain blocks, candidate domain blocks are read out one by one in accordance with the information 110 from the control section 15, and the block image information 104 is outputted to the image transforming and generating section 7. At step S515, the approximation degree is measured between all the extracted domain blocks and the current range block, and the most approximate domain block is ultimately selected. At the last step S516, it is discriminated whether or not there is a next range block to be processed. If the result is YES, the processing returns to step S510. If the result is NO, the processing ends.

In the above-described processing, since the number of dimensions of the vector data as the feature quantity is common regardless of the block sizes of the domain block and the range block, high-speed processing can be carried out. Also, it is clear that reduction in calculation time can be realized in comparison to the case where search through all the domain blocks with one another is carried out to find the domain block of the highest approximation degree.

On the other hand, another simple technique for extracting the feature quantity is considered. In this case, there is an advantage that the processing circuit is more simplified.

For example, an input block is uniformly divided into four subblocks denoted by A, B, C and D, and the so-called activity of each of the four subblocks is calculated. For this activity, the dispersion value of the pixel value may be used. Subsequently, numbering is carried out in accordance with the magnitude of the four activity values, and numbers 1, 2, 3 and 4 are allocated to the subblocks A, B, C and D in the corresponding order. The feature quantity of the block is the above-mentioned numbers arranged in the order of the subblocks A, B, C and D, and this set of numbers is defined as the class of the block. For example, if the order from the greatest activity value is B, A, C and D, the numbers allocated to the subblocks A, B, C and D are 2, 1, 3 and 4, respectively. Therefore, the value of the class (or class number) is "2134".

Thus, in the case where the input block is divided into four subblocks, the total number of classes is the number of sequences of the four numbers, that is, $_4P_4 = 24$ (combinations). In this case, the feature quantity can be extracted by using the same technique with respect to all the blocks, regardless of the block size. Also, it is clear that the quantity of information can be reduced by carrying out variable length coding of the class numbers obtained as described above.

Also, the quantity of information can be reduced by providing a variable length coding section in the coding and multiplexing section 9 of the first embodiment shown in Fig.3. In this case, the contrast s and the offset o found by the equations (4) and (5) in the description of the first embodiment are quantized, and variable length coding is carried out on the resultant quantized values. The variable length coding is exemplified by Huffman coding for providing a short code for a value of a high frequency of appearance and a long code for a value of a low frequency of appearance on the basis of the statistic quantity.

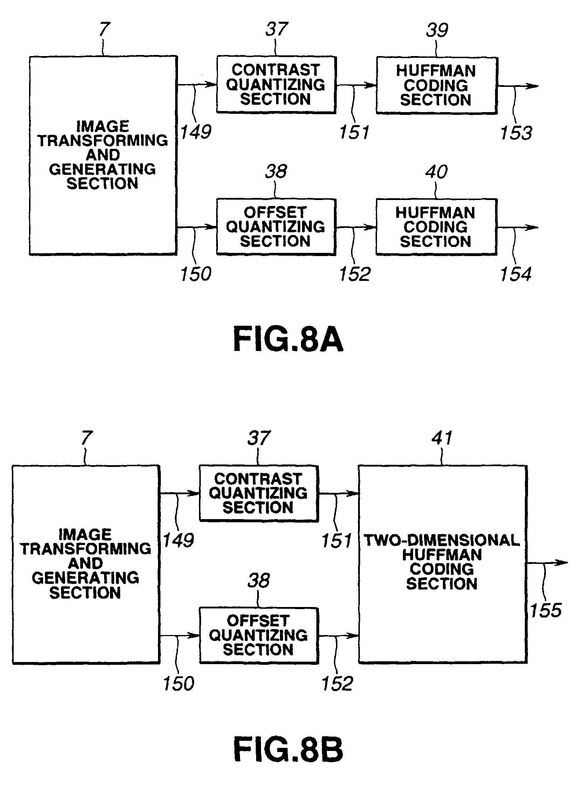

Figs.8A and 8B show two examples of the case where a variable length coding section is provided in the coding and multiplexing section 9.

The example of Fig.8A is first described. A contrast value 149 and an offset value 150 outputted from the image transforming and generating section 7, also shown in Fig.3, are inputted to a contrast quantizing section 37 and an offset quantizing section 38, respectively. A contrast quantized value 151 and an offset quantized value 152 thus obtained are inputted to Huffman coding sections 39, 40, respectively, and then Huffman-coded. Ultimately, a contrast code word 153 and an offset code word 154 are outputted from the Huffman coding sections 39, 40, respectively. These code words are multiplexed with other code words by the multiplexer in the coding and multiplexing section 9 and then transmitted, as described in the first embodiment.

On the other hand, in Fig.8B, both the contrast quantized value 151 and the offset quantized value 152 are inputted to a two-dimensional Huffman coding section 41, and a two-dimensional code word 155 is outputted. This is the only difference from the structure of Fig.8A. By using the common Huffman coding section instead of the Huffman coding sections 39, 40, the circuit scale can be reduced. In addition, if the contrast value and the offset value have high correlation, the total number of coding bits can be reduced in comparison to the case where Huffman coding is carried out by the separate Huffman coding sections 39, 40 as shown in Fig.8A.

In the above-described two cases, the Human coding section is provided as the variable length coding section. However, an arithmetic coding section may be used instead. It is a matter of course that various other structures for variable length coding can be used.

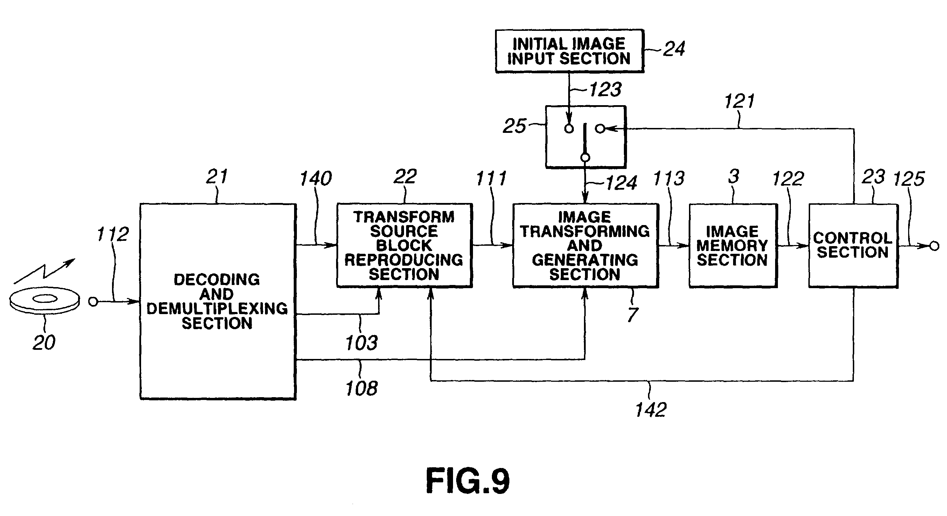

The schematic structure of an iterated transform decoding device corresponding to the iterated image transform coding device of Fig.3 will now be described with reference to Fig.9.

To this iterated image transform decoding device shown in Fig.9, multiplexed code words 112, which are outputted from the iterated transform coding device of Fig.3 and transmitted through a communication medium or recording medium 20, are supplied through an input terminal. This iterated transform decoding device of Fig.9 includes a decoding and demultiplexing section 21 for separating the multiplexed code words 112 into each code word and decoding each code word, a transform source block reproducing section 22 for reproducing a transform source block on the basis of the block number and reproducing a block located at a predetermined position, and an image transforming and generating section 7 for receiving block position information from the transform source block reproducing section 22 and a transform parameter from the decoding and demultiplexing section 21 and outputting a block image after transform. The iterated transform decoding device also includes an image memory section 3 for storing a decoded image, an initial image input section 24 for supplying an initial image, a control section 23 located at the terminal end of the decoding loop and adapted for counting the number of times the loop is gone through and outputting an ultimate decoded block image to the outside of the loop when a predetermined number is reached, and a switch 25 for selecting the block image from the initial image input section 24 or the block image as the output from the image memory section 3 in the loop.

Next, operation of the device will be described.

First, the decoding and demultiplexing section 21 separates multiplexed signals and carries out Huffman decoding of each of the resultant code words. A block number 103 thus obtained is sent to the transform source block reproducing section 22.

The block number 103 is inputted to the transform source block reproducing section 22, and the transform source block reproducing section 22 outputs block position information 111 of the transform source. A transform parameter 108 and the transform source block position information 111 are inputted to the image transforming and generating section 7. The image transforming and generating section 7 carried out image transform processing while taking synchronization in accordance with a control signal 140, and then outputs a resultant block image 113 after transform to the image memory section 3.

The image memory section 3 stores the block images in the decoding order, and outputs the whole screen or a partial image 122 of the screen to the control section 23. The control section 23 is located at the terminal end of the decoding loop. On completion of loop control in accordance with predetermined control, the control section 23 outputs an ultimate decoded block image 125 to an output terminal outside of the loop. If the decoding loop is further gone through, a decoded image 121 from the control section 23 is inputted to the switch 25, and the block position information 111 of the next decoding target block is outputted from the transform source block reproducing section 22 to the image transforming and generating section 7 in accordance with a read designation signal 142 from the control section 23. When the number of times the decoding loop is gone through is not less than two, the switch 25 is changed over to an input image 124 to the image transforming and generating section 7 again. On the other hand, in the initial state, an initial image 123 stored in the initial image input section 24 is inputted to the switch 25, and the switch 25 is changed over to the input image 124. In this case, the initial image may be an arbitrary image. This is based on the characteristic of iterated transform decoding such that "no matter what initial image is used, the same image is obtained as a result of convergence."

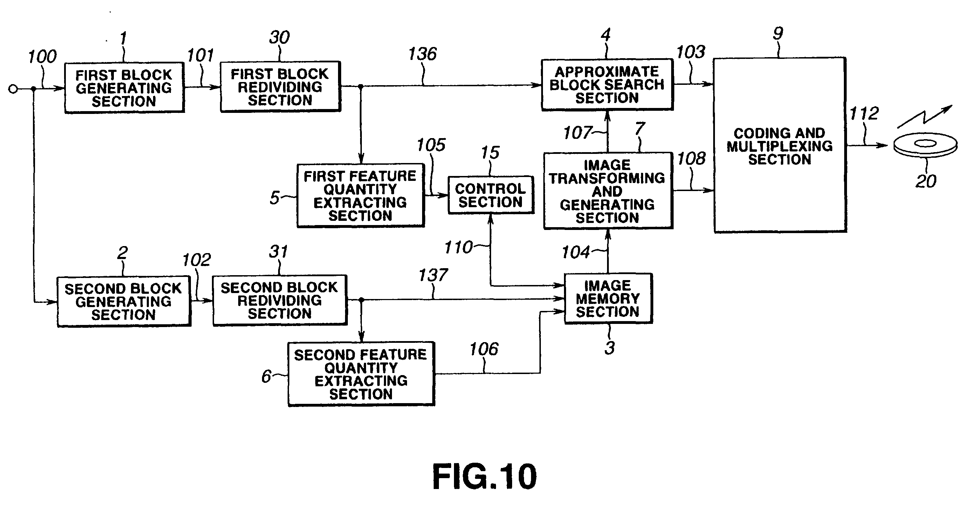

An iterated transform coding device as a second embodiment of the present invention will now be described with reference to Fig.10.

The iterated transform coding device shown in Fig.10 has a structure in which a first block redividing section 30 is provided on the output side of the first block generating section 1 and in which a second block redividing section 31 is provided on the output side of the second block generating section 2, in addition to the structure of the first embodiment of Fig.3. Since the other parts of the structure are similar to those of the first embodiment of Fig.3, the corresponding parts are denoted by the same reference numerals and will not be described further in detail.

Next, operation of this device will be described.

A second block image 102 is redivided into a plurality of subblocks by the second block redividing section 31, and a second subblock image 137 is obtained. At this point, if the above-mentioned dispersion value in the block is greater than a threshold value, it is discriminated that redivision is to be carried out. If the dispersion value is smaller, redivision is not carried out. Therefore, the second subblock image 137 becomes equal to the second block image 102. In this example, as a matter of convenience, the output 137 of the second block redividing section 31 is referred to as the second subblock image. On the subsequent stage, the redivided subblock image 137 is inputted to the second feature quantity extracting section 6, similarly to the first embodiment. A second feature quantity 106 extracted by the second feature quantity extracting section 6 is multiplexed with the subblock image 137 and then stored in the image memory section 3.

After the second image blocks 102 for one screen are generated by the second block generating section 2 and all the above-described processing is completed, first block images 101 are generated by the first block generating section 1 and sequentially sent to the first block redividing section 30. The first block redividing section 30 similarly carries out discrimination of block redivision by using the dispersion value in the block image, then redivides the block into predetermined subblock images, and outputs a first subblock image 136. On the subsequent stage, the redivided subblock image 136 is inputted to the first feature quantity extracting section 5, similarly to the first embodiment. A feature quantity 105 of the first subblock image extracted by the first feature quantity extracting section 5 is inputted to the control section 15. After that, the control section 15 inputs the information 110 obtained by multiplexing the feature quantity 105 of the first subblock image and a read enable signal to the image memory section 3. The control section 15 carries out control so as to read out a subblock image having a feature quantity equal to the feature quantity 105 of the first subblock image from the image memory section 3 and send the read-out subblock image as subblock image information 104 from the image memory section 3 to the image transforming and generating section 7. If the first subblock image 136 is constituted by a plurality of subblock images, the foregoing operation is to be carried out with respect to all these subblock images. It is clear that as the number of subblock images increases, it becomes easier to search for an approximate block having a smaller error, thus improving the quality of the coded image, whereas increase in overhead causes increase in the number of coding bits. Thus, it is necessary to adaptively control the number of subblock images for redivision, in consideration of trade-off between these advantage and drawback.

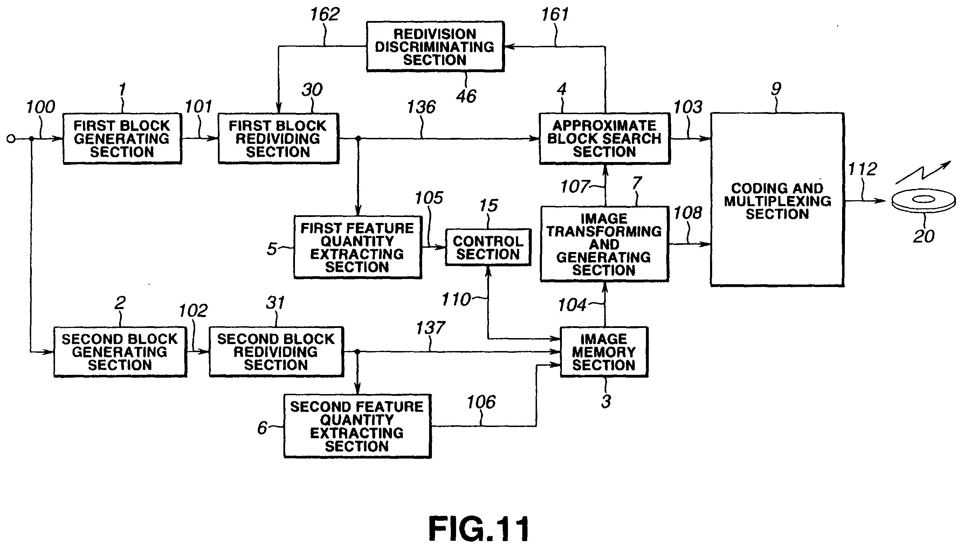

In a modification of the second embodiment, as shown in Fig.11, a matching error 161 obtained from the approximate block search section 4, that is, the matching error 161 between the first subblock image 136 and the block image 107 after transform, is discriminated with reference to a threshold value by a redivision discriminating section 46, and a redivision identification signal 162 is outputted to the first block redividing section 30. When the redivision identification signal 162 designates redivision, the first block redividing section 30 carries out processing for redividing the subblock.

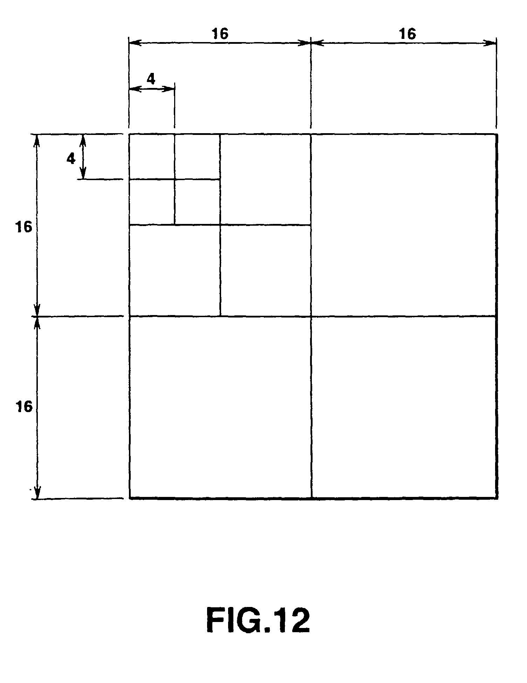

Fig.12 shows the state of redivision at this point. For example, a block having a size of 32×32 is divided by first division to generate four subblocks each having a size of 16×16. Then, only the upper left subblock having the size of 16×16 is redivided by second division to generate four subblocks each having a size of 8×8. Furthermore, only the upper left subblock having the size of 8×8 is redivided by third division to generate four subblocks each having a size of 4×4.

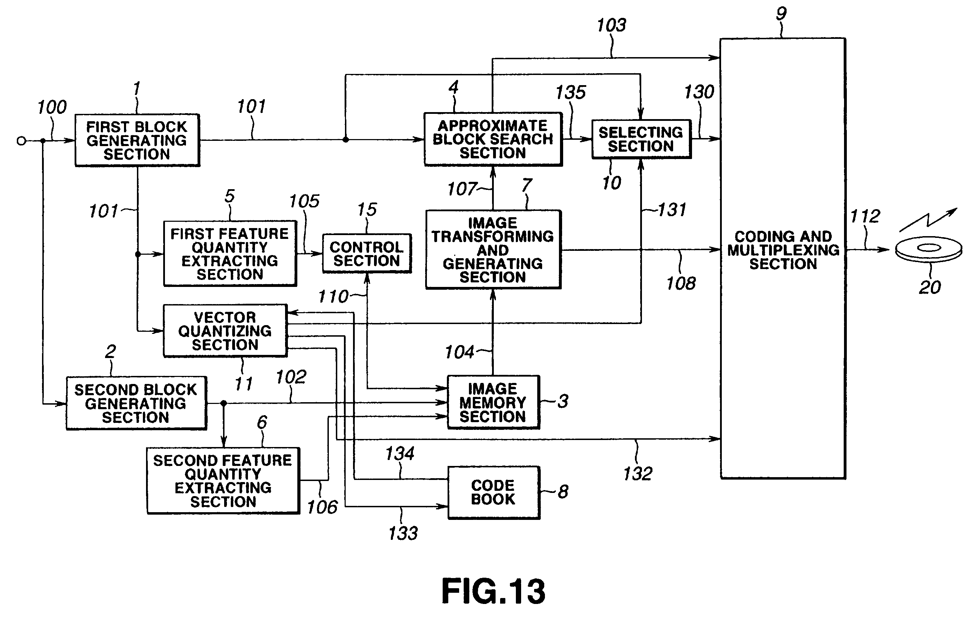

An iterated image transform coding device as a third embodiment of the present invention will now be described with reference to Fig.13.

The iterated transform coding device as the third embodiment shown in Fig.13 has a vector quantizing section 11 and a code book 8 connected to the structure of the first embodiment of Fig.3, for the purpose of improving the coding efficiency. That is, the vector quantizing section 11 receives the first block image from the first block generating section 1 and searches the code book 8, thus sending a block image of the optimum quantization representative vector to a selecting section 10. The use of the vector quantizing section 11 will be later described in detail. Since the structure except for the vector quantizing section 11, the code book 8 and the selecting section 10 is similar to that of the first embodiment of Fig.3, the corresponding portions are denoted by the same reference numerals and will not be described further in detail.

Next, operation of this device will be described.

The second block generating section 2, to which an original image 100 is inputted through the input terminal, outputs a second block image 102 generated by dividing the screen into a predetermined block size. The second feature quantity extracting section 6 extracts and outputs a second feature quantity 106 in accordance with the technique described in the first embodiment. The image memory section 3 multiplexes and stores the second block image 102 and the second feature quantity 106. This series of operation is carried out on all the blocks constituting the original image 100. As a result, the second block images 102 for one screen and the second feature quantity 106 are multiplexed and stored in the image memory section 3. After completion of writing of the block images for one screen, first block images 101 sequentially generated by the first block generating section 1 are inputted to the first feature quantity extracting section 5, and the first feature quantity extracting section 5 extracts and outputs a first feature quantity 105 to the control section 15 in accordance with the technique described in the first embodiment of Fig.3. The control section 15 outputs information 110 obtained by multiplexing the feature quantity 105 of the first block image and a read enable signal to the image memory section 3, and carries out control so as to read out second block image information 104 having the same feature quantity as the first feature quantity 105 from the image memory section 3 and output the second block image information 104 to the image transforming and generating section 7. The image transforming and generating section 7 carries out predetermined transform processing such as rotation, translation, expansion, and contraction with respect to the block image information 104, and outputs a block image 107 after transform to the approximate block search section 4. The approximate block search section 4 takes matching between the first block image 101 and the block image 107 after transform, then searches for a block image which realizes the minimum error between these block images, and selects and outputs this block image. A block number 103 and a transform parameter 108 obtained at this point are separately coded by the coding and multiplexing section, and resultant code words are multiplexed and sent out as an output of the iterated transform coding device.

The vector quantizing section 11 has the first block image 101 inputted thereto, then selects a vector which provides the minimum distortion from among the quantization representative vectors stored in the code book 8, and outputs a block image 131 and an index 132 of the quantization representative vector. That is, the vector quantizing section 11 generates an input vector of the inputted first block image, and outputs a read signal 133 to the code book 8. Then, the read signal is supplied to the code book 8, and quantization representative vectors 134 with indices are sequentially read out from the code book 8 and inputted to the vector quantizing section 11. The vector quantizing section 11 searches for a representative vector which realizes the minimum distortion with respect to the input vector, thus obtaining the index and the vector-quantized block image. Vector quantization will be later described in detail.

The selecting section 10 compares the block image 131 obtained by vector quantization and the block image 135 obtained by iterated transform coding, and selects the block image more approximate to the first block image 101. The selecting section 10 then outputs selection information 130 to the coding and multiplexing section 9.

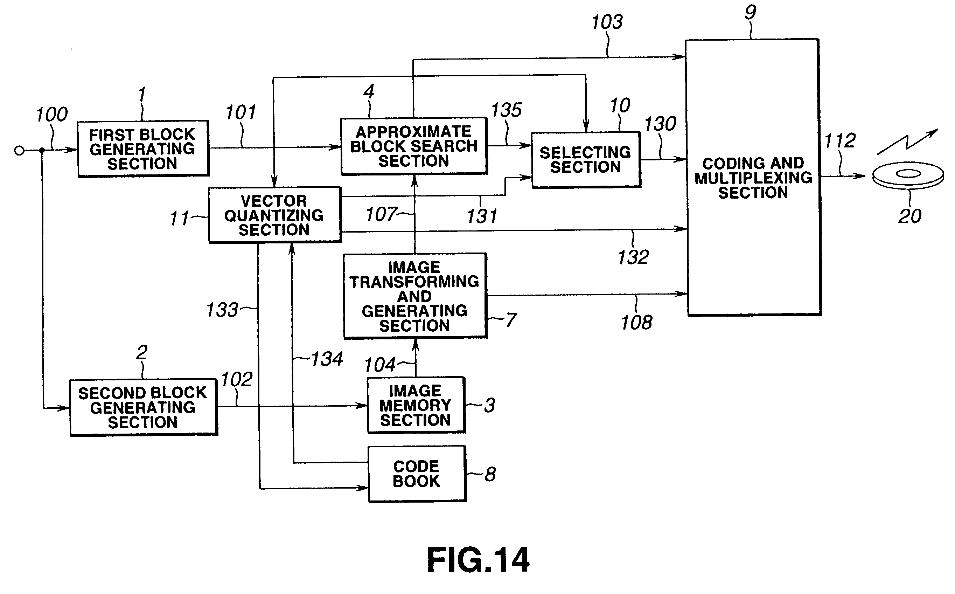

The use of iterated transform coding in combination with vector quantization will now be described with reference to Fig.14.

Fig.14 shows the schematic structure of an iterated image transform coding device used for explaining the third embodiment of the present invention. The iterated transform coding device of Fig.14 includes two different block generating sections 1 and 2, an image memory section 3 for storing second block images for one screen, an image transforming and generating section 7 for carrying out predetermined transform processing on the second block images read out from the image memory section 3, and an approximate block search section 4 for searching for a block image most approximate to the first block image. This iterated transform coding device also includes a vector quantizing section 11 for carrying out vector quantization of the first block image and outputting a quantization representative vector and a quantization index, a code book 8 attached to the vector quantizing section 11, a selecting section 10 for comparing the block image obtained from the approximate block search section 4 and the block image obtained from the vector quantizing section 11 and selecting the block image more approximate to the first block image, and a coding and multiplexing section 9 for coding, multiplexing and transmitting the resultant block number, transform parameter and quantization index.

This iterated transform coding device is aimed at realizing an iterated transform coding device having a high coding efficiency with respect to all images. The device has such a structure that a vector quantizer is connected to an iterated transform coder.

Next, operation of this device will be described.

In the iterated transform coding device shown in Fig.14, an image is divided in a specified block size, and each block image 102 is outputted to the image memory section 3. In the above-described first embodiment of Fig.3, the block image and the feature quantity thereof are multiplexed and stored in the image memory section 3. However, in this structure of Fig.14, only the block image 102 is stored. Then, on completion of writing of all the blocks constituting one screen to the image memory section 3, first block images 101 generated by the first block image generating section 1 are inputted to the approximate block search section 4. At the same time, block images 104 read out from the image memory section are sequentially inputted (normally, from the upper left part to the lower right part) to the image transforming and generating section 7, and the image transforming and generating section 7 carries out predetermined transform processing on these block images. The transform processing technique may be similar to that of the first embodiment, and affine transformation may be used as the transform method.

A block image 107 after transform is inputted to the approximate block search section 4. The approximate block search section 4 carries out matching between the first block image 101 and the block image 107 after transform, and measures the error between these block images. By carrying out the foregoing operation with respect to all the blocks stored in the image memory section 3, a block image which realizes the minimum error with respect to the first block image 101 is searched for and extracted. A block image 135 after transform and a block number 103 of the block image which provides the minimum error, obtained as a result of the foregoing operation, are outputted from the approximate block search section 4.

Next, operation of the vector quantizing section 11 will be described.

Vector quantization is a technique frequently used for image coding, and is known for its high coding efficiency. While scalar quantization is a technique for quantizing sampled values one by one, vector quantization is adapted for collectively quantizing a plurality of sampled values as a vector, thereby utilizing the redundancy between the sampled values for information compression. A typical example of vector quantization is briefly described hereinafter. First, an input vector $\underline{x}$ is assumed to be a K-dimensional vector.

$$\underline{x} = (x_1, x_2, ..., x_K)^T \tag{8}$$

In this case, the signal space in which the input vector exists is a K-dimensional space. This K-dimensional space is expressed as $R^K$. The K-dimensional space $R^K$ is divided into N units of areas $P_1$, $P_2$, ..., $P_N$ which do not overlap one another, and one quantization representative vector is determined in each area $P_i$.

$$\underline{y}i = (y_{i1}, y_{i2}, ..., y_{iK})^T \tag{9}$$

The set of areas $P_1$, $P_2$, ..., $P_N$ is expressed as **P**. The set of quantization representative vectors $\underline{y}_1$, $\underline{y}_2$, ..., $\underline{y}_N$ is expressed as **C** and referred to as a code book.

Using the foregoing expressions, operation of "N-dimensional N-level vector quantization" can be described as

$$Q(\underline{x}) = \underline{y}_i \tag{10}$$

where mapping from the K-dimensional signal space $R^K$ to the code book **C** is Q(.) and where the input vector $\underline{x}$ belongs to the area $P_i$. Thus, operation of the encoder and decoder at this point can be expressed by mapping a(.) and b(.) of the following equations.

$$\text{Encoder}: a(\underline{x}) = i \tag{11}$$

$$\text{Decoder}: b(i) = \underline{y}_i \tag{12}$$

Using the above-described vector quantization, the first block image 101 is coded. The code book needs to be designed in advance as a database in which the quantization representative vectors are stored. For designing the code book, a known technique such as an LBG rastering method (Y. Linde, A. Buzo and R.M. Gray, "An Algorithm for Vector Quantizer Design," IEEE Trans. COM-28, 1, pp.84-95) may be used. The number of dimensions is equivalent to the number of pixels in a block. In the case of 4×4 pixels, the number of dimension becomes K = 16. The number of levels N directly affects the size of the code book. If N becomes greater, the number of quantization representative vectors increases and therefore the coding performance is improved. However, there is also a drawback such that the memory capacity for storing the quantization representative vectors is increased. In this example, it is assumed that the number of dimensions of the code book is K = 16. Therefore, in this case, since the block size of the first block image is limited to 4×4, the first block generating section sequentially divides the screen in the block size of 4×4.

In accordance with the above-mentioned equation (8), the input vector of the first block image is expressed as follows.

$$\underline{x} = (x_1, x_2, ..., x_{16})^T$$

When the vector quantizing section 11 outputs the read signal 133 to the code book 8, the quantization representative vectors 134 with indices are sequentially read out from the code book 8 and inputted to the vector quantizing section 11. The quantization representative vector which realizes the minimum distortion from the input vector $\underline{x}$ is searched for from all the (N units of) quantization representative vectors stored in the code book 8. The index i of the quantization representative vector $\underline{y}_i$ obtained at this point is outputted from the vector quantizing section 11 as the index 132, and the quantization representative vector $\underline{y}_i$ is outputted from the vector quantizing section 11 as the vector-quantized block image 131. In this case, it is clear that the following formula is satisfied, where the distortion quantity generated at the time of replacing the input vector $\underline{x}$ by the quantization representative vector $\underline{y}_i$ is defined as d $(\underline{x}, \underline{y}_i)$.

$$d\ (\underline{x}, \underline{y}_i) \le d\ (\underline{x}, \underline{y}_j) \text{ (for all } j \ne i, j \le N) \tag{13}$$

While there are various definitions of the distortion quantity, a square distortion measurement as expressed by the following equation may be used.

$$d\ (\underline{x}, \underline{y}_i) = \| \underline{x} - \underline{y}_i \|^2 \tag{14}$$

The block image 135 after transform outputted from the approximate block search section 4 and the block image 131 from the vector quantizing section 4 are inputted to the selecting section 10, and the block image having the smaller error from the first block image 101 of the original image is selected. Thus, the selection information 130 is outputted from the selecting section 10. If the block image 135 after transform from the approximate block search section 4 is selected, the block number 103 of the block image is outputted from the approximate block search section 4. As a result, when the iterated transform coding is selected in the coding and multiplexing section 9, the transform parameter 108, the block number 103 and the selection information 130 are individually coded by the coding and multiplexing section 9, and the code words are multiplexed and transmitted as multiplexed code words 112 from the iterated transform coding device. On the other hand, when vector quantization is selected, the quantization index 132 and the selection information 130 are individually coded by the coding and multiplexing section 9, and the code words are similarly multiplexed and transmitted as multiplexed code words 112 from the iterated transform coding device.

In the above-described embodiment, the block size for vector quantization is 4×4 and the number of dimensions of the vector data stored in the code book is 16. However, it is also possible that the block size is 8×8 and hence the number of dimensions of the vector data stored in the code book is 64. In addition, it can also be considered to provide a plurality of code books for carrying out vector quantization with plural types of block sizes and adaptively switch the code books to improve the overall coding efficiency.

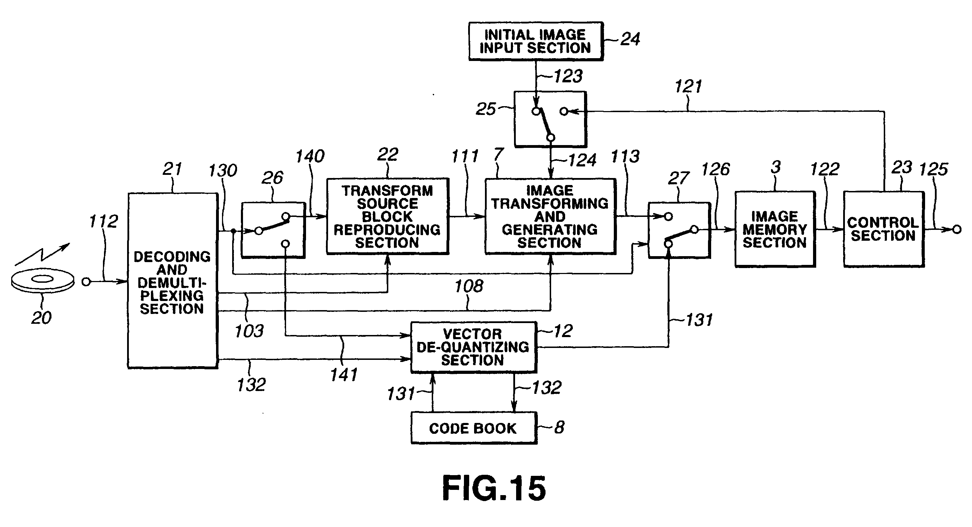

An iterated image transform decoding device as a fourth embodiment of the present invention will now be described with reference to Fig.15. The fourth embodiment shown in Fig.15 is a decoding device corresponding to the iterated image transform coding device of Fig.13, and also corresponding to the iterated transform coding device of Fig.14.

The iterated image transform decoding device shown in Fig.15 includes a decoding and demultiplexing section 21 for separating the multiplexed code words outputted and sent from the iterated transform coding device of Fig.13 (or Fig.14) and separately decoding each code word, a first switch 26 for carrying out switching to different coding systems in accordance with selection information, and a transform source block reproducing section 22 for reproducing a transform source block on the basis of the block number, thus reproducing a block located at a predetermined position. This iterated image transform decoding device also includes an image transforming and generating section 7 for receiving block position information from the transform source block reproducing section 22 and a transform parameter from the decoding and demultiplexing section 21 and outputting a block image after transform, a vector de-quantizing section 12 for reading out from a code book 8 a block image corresponding to a quantization index obtained from the decoding and demultiplexing section 21 and outputting a vector-de-quantized image block, and a control section 23 located at the terminal end of the decoding loop and adapted for counting the number of times the loop is gone through and outputting an ultimate decoded block image to the outside of the loop when a predetermined number of times is reached. The iterated transform decoding device also includes an initial image input section 24 for supplying an initial image, a second switch 25 for selecting the block image from the initial image input section 24 or the block image as an output from an image memory section 3 in the loop, a third switch 27 for selecting a decoded block image in accordance with selection information, and the image memory section 3 for storing block images selected by the third switch 27 for one screen.

Since the structure except for the vector de-quantizing section 12, the code book 8, the second switch 26 and the third switch 27 is similar to that of the iterated transform decoding device of Fig.9, the corresponding portions are denoted by the same numerals and will not be described further in detail.

Next, operation of this device will be described.

First, the decoding and demultiplexing section 21 separates multiplexed signals to generate selection information 130, and from this selection information 130, the first switch 26 switches the coding system. If iterated transform decoding is selected, the first switch 26 is changed over and a control signal is outputted to the transform source block reproducing section 22. When the control signal 140 is transmitted, a block number 103 obtained by demultiplexing by the decoding and demultiplexing section 21 is inputted to the transform source block reproducing section 22, and the transform source block reproducing section 22 outputs transform source block position information 111. A transform parameter 108 and the transform source block position information 111 inputted to the image transforming and generating section 7, and the image transforming and generating section 7 outputs a block image 113 after transform to the third switch 27. As the transform method, affine transformation can be used. In this case, an affine transformation section for carrying out a series of transform processing such as rotation, translation, and contraction may be provided in the image transforming and generating section 7.

The third switch 27 selects the block image 113 after transform or an output 131 from the vector de-quantizing section 12 as later described, in accordance with the selection information 130, and inputs the selected input as a decoded block image 126 to the image memory section 3. The image memory section 3 stores block images for one whole screen, and then outputs an image 122 of the whole screen to the control section 23. The control section 23 is located at the terminal end of the decoding loop. The control section 23 counts the number of times the loop is gone through, and outputs an ultimate decoded block image 125 to the outside when a predetermined number of times is reached. If the decoding loop is to be gone through further, a decoded image from the control section 23 is inputted to the second switch 25. When the decoding loop is gone through for the second time or more, the second switch 25 is changed over to an input image 124 to the image transforming and generating section 7 again. On the other hand, in the initial state, an initial image 123 stored in the initial image input section 24 is inputted to the second switch 25, and the second switch 25 is changed over to the input image 124. In this case, the initial image may be an arbitrary image, as described in the first embodiment.

Next, operation of vector de-quantization will be described.

In accordance with the selection information 130 separated by the decoding and demultiplexing section 21, the first switch 26 is changed over, and a control signal 141 from the first switch 26 and a quantization index 132 from the decoding and demultiplexing section 21 are outputted to the vector de-quantizing section 12. From the vector de-quantizing section 12, the quantization index 132 is outputted to the code book 8. Meanwhile, from the code book 8, a quantization representative vector 131 corresponding to the quantization index 132 is read out and outputted again to the vector de-quantizing section 12. The quantization representative vector 131 from the code book 8 expresses the block image data, as explained in the description of vector quantization. As a result, the block image 131 outputted after vector de-quantization is inputted to the third switch 27. The subsequent changeover of the third switch 27 is already described above.

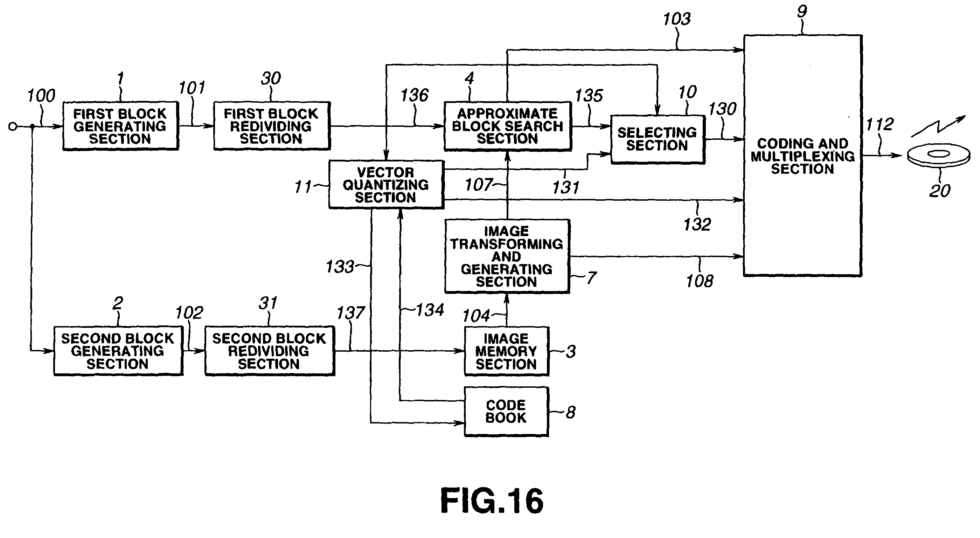

As a modification of the third embodiment, a structure such that the block redividing section of Fig.10 is provided in the structure of Fig.14 will now be described with reference to Fig.16.

Specifically, this exemplary structure of Fig.16 is formed by providing a first block redividing section 30 and a second block redividing section 31, similarly to the second embodiment of Fig.10, in the device structure using iterated transform coding in combination with vector quantization as shown in Fig.14. The other parts of this structure are similar to those described above. Thus, the corresponding portions in the drawing are denoted by the same reference numerals and will not be described further in detail.

The basic operation of this iterated transform coding device of Fig.16 is similar to that of the coding device described with reference to Fig.14. Also, as described in the second embodiment of Fig.10, the second block redividing section 31 divides a block image into a plurality of subblock images, and these second subblock images 137 are stored in the image memory section 3. This iterated transform coding device employs such a structure that iterated transform coding and vector quantization are switched in accordance with the magnitude of coding distortion thereof. Thus, a block image 135 obtained by searching for an image 107 after transform that is most approximate to a first subblock image 136 redivided by the first block redividing section 30 or a block image 131 as a quantization representative vector obtained by vector quantization is selected by the selecting section 10. In addition, by using the code book 8 in which a plurality of dimensions of the quantization representative vector are prepared, plural types of block sizes of the first subblock image 136 can be used and the coding efficiency is further improved. Therefore, when the memory of the code book has a sufficient capacity, the above-described structure may be employed. Also, it is obvious that even when separate code books 8 corresponding to the number of dimensions of the quantization representative vector are provided in the above-described structure, similar effects can be obtained. In this structure, too, it is clear that if the first subblock image 136 is constituted by a plurality of subblock images, the above-described operation is carried out on all these subblock images, similarly to the fourth embodiment.

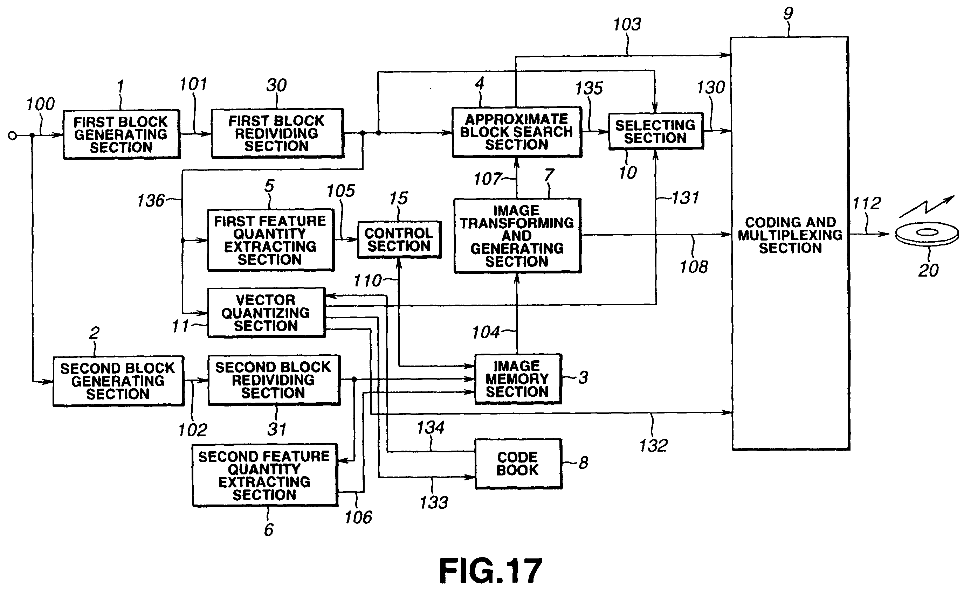

An iterated image transform coding device as a fifth embodiment of the present invention will now be described with reference to Fig.17.

The iterated transform coding device as the fifth embodiment shown in Fig.17 has such a structure that a first block redividing section 30 and a second block redividing section 31 are provided, similarly to the second embodiment of Fig.10, in the structure of the third embodiment of Fig.13. The other parts of this structure are similar to those of the above-described embodiment. Therefore, the corresponding portions in the drawing are denoted by the same reference numerals and will not be described further in detail.

The basic operation of this fifth embodiment is similar to that of the third embodiment. The operation of the fifth embodiment differs from that of the third embodiment in the following manner. That is, since the two block redividing sections are provided, block images generated by the first block generating section 1 and the second block generating section 2 are redivided into subblocks in accordance with the predetermined processing described in the fourth embodiment. Thus, the quality of the coded image is improved. The operation of vector quantization of the redivided subblock images may be carried out similarly to the technique explained in the description of the iterated transform coding device of Fig.16.

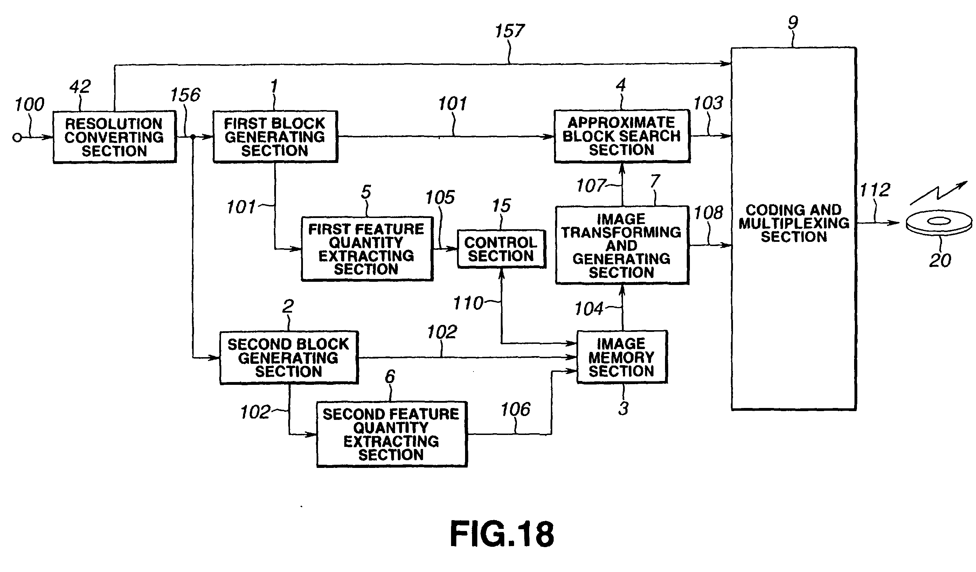

An iterated image transform coding device as a sixth embodiment of the present invention will now be described with reference to Fig.18.

The iterated transform coding device as the sixth embodiment shown in Fig.18 has such a structure that, in the structure of the first embodiment shown in Fig.3, an input image 100 is sent to a resolution converting section 42 to find a resolution conversion image 156 and resolution conversion information 157. Then, the resolution conversion image 156 is sent to the first and second block generating sections 1 and 2, and the resolution conversion information 157 is sent to the coding and multiplexing section 9. The other parts of this structure are similar to those of the embodiment of Fig.3. Therefore, the corresponding portions in the drawing are denoted by the same reference numerals and will not be described further in detail.

Next, operation of this device will be described.

The resolution converting section 42 of Fig.18 carries out predetermined resolution conversion processing with respect to the input image 100. Then, the resolution converting section 42 outputs the resolution conversion image 156, and also outputs the resolution conversion information 157 to the coding and multiplexing section 9. For example, in the case where the image size of the input image 100 is 512 pixels $\times$ 512 lines and where resolution conversion to $\frac{1}{2}$ is carried out both longitudinally and laterally, image information of 256 pixels $\times$ 256 lines is provided as the resolution conversion image 156, and a symbol meaning longitudinal and lateral $\frac{1}{2}$ resolution conversion is provided as the resolution conversion information 157. The subsequent processing by the first block image generating section 1 and the second block image generating section 2, to which the resolution conversion image 156 is inputted, is similar to the processing described in the first embodiment.

As significant advantages of interlocking of resolution conversion (in the case of lowering the resolution) with iterated transform coding, the following two points can be noted, that is, reduction in the processing quantity, which is a drawback in iterated transform coding, and improvement in picture quality in the case of coding with the same coding bits. Although the former point is obvious, the latter point will be briefly described. If the image size is contracted, the block size of the first block image 101 can be set at a small value and therefore the transform parameter 108 of details of the image can be extracted. Also, the quantization step size in quantizing the transform parameter can be reduced. Thus, in consideration of coding with the same coding bits, there is a possibility that the picture quality is more improved by caning out coding with an image with a reduced resolution. This is a significant feature of this iterated transform coding.

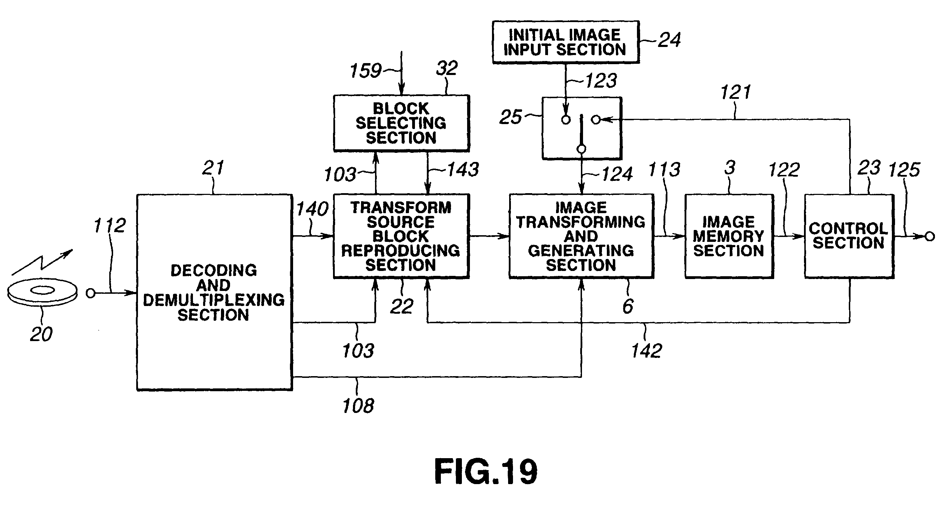

An iterated image transform decoding device as a seventh embodiment of the present invention will now be described with reference to Fig.19. The structure of the seventh embodiment shown in Fig.19 is formed by providing a block selecting section 32 in the iterated image transform decoding device of Fig.9. The other parts of this structure are similar to those of Fig.9. Therefore, the corresponding portions in the drawing are denoted by the same reference numerals and will not be described further in detail.

Next, operation of this device will be described.

First, in accordance with a read designation signal of a control signal 142 outputted from the control section 23, a block number 103 obtained by demultiplexing by the decoding and demultiplexing section 21 is inputted to the transform source block reproducing section 22. At this point, the transform source block reproducing section 22 outputs the block number 103 to the block selecting section 32. The block selecting section 32 discriminates whether or not the block number 103 is of a decoding target block in accordance with block selection information 159 provided by an external input or an initial set value, and outputs identification information 143 to the transform source block reproducing section 22. The subsequent processing by the transform source block reproducing section 22 is similar to the processing explained in the description of the decoding device of Fig.9.

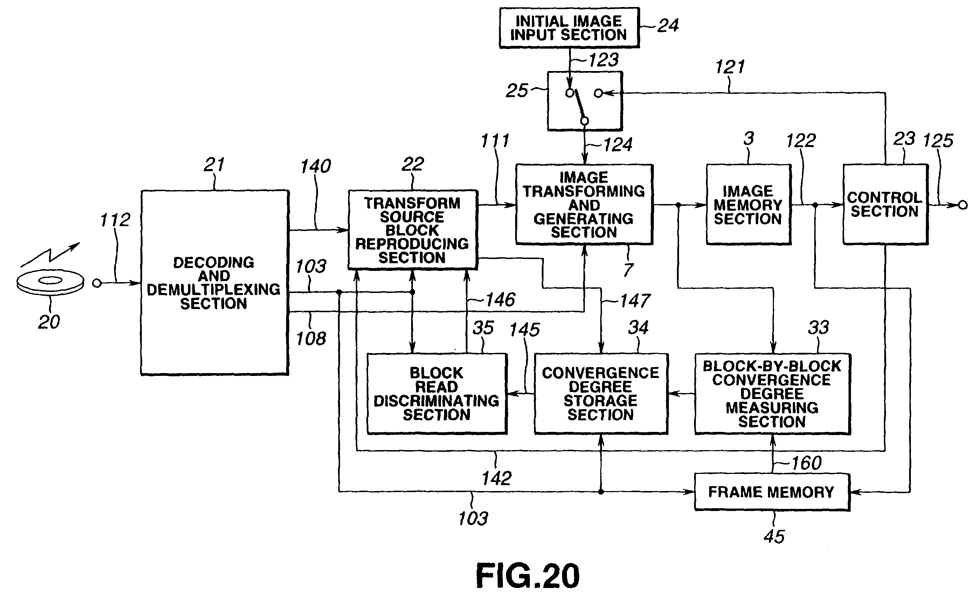

An iterated image transform decoding device as an eighth embodiment of the present invention will now be described with reference to Fig.20. The structure of the eighth embodiment shown in Fig.20 is formed by providing a convergence degree storage section 34, a block read discriminating section 35 and a frame memory 45 in the iterated image transform decoding device of Fig.9. The other parts of this structure are similar to those of Fig.9. Therefore, the corresponding portions in the drawing are denoted by the same reference numerals and will not be described further in detail.

Next, operation of this device will be described.

A block image 113 after transform, obtained by transforming block position information 111 of a decoding target block by the image transforming and generating section 7, is outputted to the image memory section 3 and is also inputted to a block-by-block convergence degree measuring section 33. On the other hand, block images 122 for the whole screen or a part of the screen, stored in the image memory section 3, are inputted to the control section 23 and are also written in the frame memory 45. The frame memory 45, which has stored decoded images for the whole screen or apart of the screen at the time of the previous decoding loop, outputs a block image 160 corresponding to a block number 103 to the block-by-block convergence degree measuring section 33. As a result, the absolute value of difference between the block image 160 and the block image 113 after transform is found, and a convergence degree 144 is calculated. The calculated convergence degree 144 is inputted to and stored in the convergence degree storage section 34, and a block convergence degree 145 is outputted to the block read discriminating section 35, if necessary.

If the block convergence degree 145 is smaller than a given threshold value, the block read discriminating section 35 determines that the block corresponding to the block number 103 has been sufficiently converged. The convergence degree can be defined by the following equation, where P(n) represents the absolute value of difference at the time of the n-th decoding loop.

$$\text{Convergence degree } S = |(P(n) - P(n+1))/P(n)|$$

The conditions for convergence may be defined as satisfying S < Th (Th is a given threshold value).

As a result, with respect to a block which satisfies the convergence condition, the transform source block reproducing section 22 does not output the block position information 111 of the decoding target block in accordance with the identification signal 146. On the contrary, if the convergence condition is not met, the transform source block reproducing section 22 outputs the block position information 111 of the decoding target block in accordance with the identification signal 146.

Meanwhile, a block convergence degree read designation signal 147 is outputted from the transform source block reproducing section 22 to the convergence degree storage section 34, and the block convergence degree 145 is outputted from the convergence degree storage section 34, as described above. Then, similarly to the foregoing, the block read discriminating section 35 determines whether the block is to be read out or not.

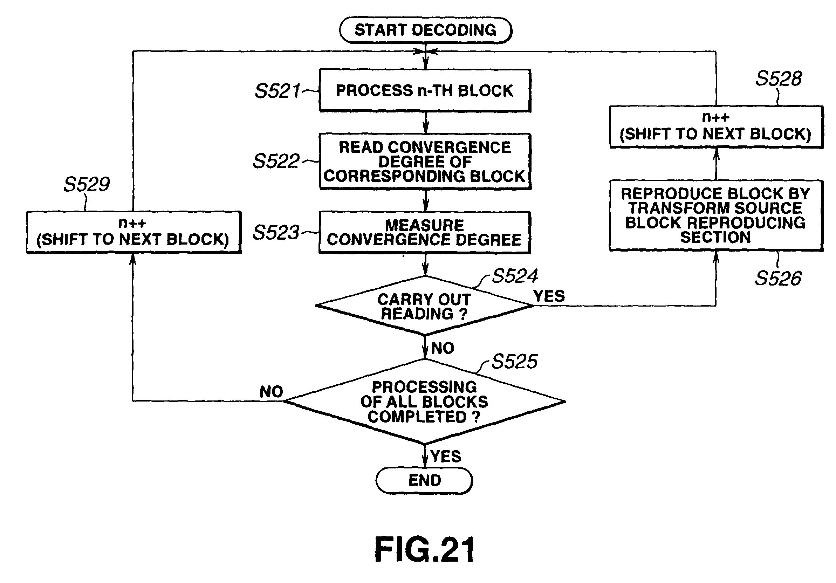

Fig.21 is a flow chart specifically showing the above-described operation. At the first step S521 in Fig.21, the above-described processing of the n-th block is carried out, and at the next step S522, the convergence degree of the n-th block is read out. At the subsequent step S523, the convergence degree is measured. At step S524, whether or not reading is to be carried out is discriminated by the block read discriminating section 35. If the result is YES, the processing goes to step S526, and the transform source block reproducing section 22 carried out block reproduction. At step S528, increment of the block number n, that is, shift to the next block, is carried out, and the processing returns to step S521. If the discrimination result at step S524 is NO, the processing goes to step S525 and whether processing of all blocks is completed or not is discriminated. If the result is NO, the processing goes to step S529 to carry out increment of n (that is, shift to the next block), and then, the processing returns to step S521.

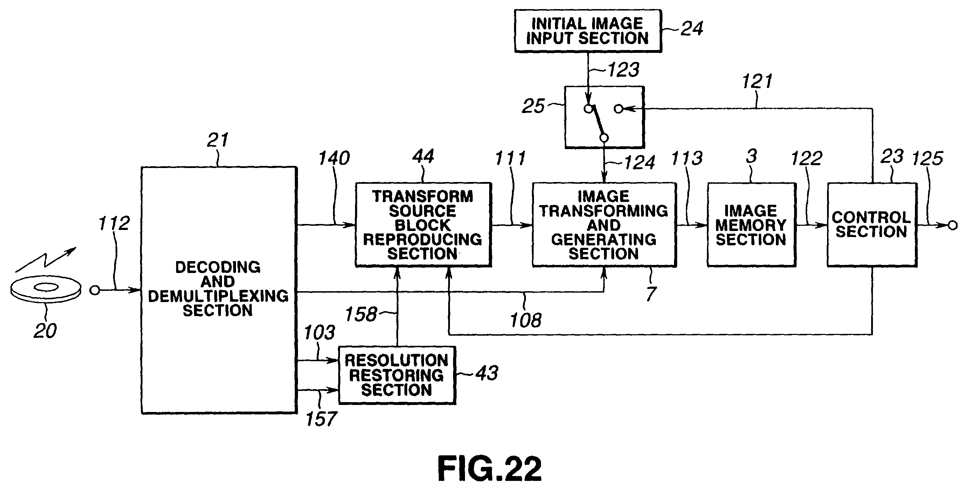

An iterated image transform decoding device as a ninth embodiment of the present invention will now be described with reference to Fig.22. The ninth embodiment shown in Fig.22 is a decoding device corresponding to the iterated image transform coding device as the sixth embodiment of the present invention shown in Fig.18. This iterated transform decoding device has such a structure that a resolution restoring section 43 is provided in the iterated image transform decoding device of Fig.9 so that block position information from the resolution restoring section 43 is sent to a transform source block reproducing section 44. The other part of this structure are similar to those of Fig.9. Therefore, the corresponding portions in the drawing are denoted by the same reference numerals and will not be described further in detail.

Next, operation of this device will be described.

The resolution restoring section 43, to which a block number 103 from the decoding and demultiplexing section 21 is inputted, outputs position information 158 of a block having its resolution converted and restored in accordance with resolution conversion information 157, to the transform source block reproducing section 44. The transform source block reproducing section 44 in this embodiment is assumed to be different from the transform source block reproducing section 22 of the above-described embodiment, since its input is different. The subsequent processing is similar to the processing described with reference to Fig.9.

In this decoding device of Fig.22, in the case where the resolution conversion information 157 is as described above (½, ½), the resolution is reduced to ½ horizontally and vertically by the iterated transform coding device. Therefore, the resolution restoring section 43 doubles the block size horizontally and vertically, and position information 158 of the expanded block is outputted to the transform source block reproducing section 44.

With respect to the effectiveness of the ninth embodiment, the following Table 1 shows the results of experiment. In Table 1, Cb represents a color-difference signal of a blue component, and Cr represents a color-difference signal of a red component. These Cb and Cr are often used for expressing the image format.

TABLE 1

| Comparison of Results Between Conventional Technique and Resolution Conversion Coding and Decoding | | |
|---|---|---|
| | Conventional Technique | Resolution Conversion |
| Cb | 33.29 (dB) | 34.09 (dB) |
| Cr | 33.05 (dB) | 33.93 (dB) |
| Number of Bits | 10,946 (bytes) | 10,296 (bits) |

As is clear from Table 1, the SNR of the decoded image obtained by decoding, using the iterated transform decoding device of the ninth embodiment, the code word obtained by the iterated transform coding device of the sixth embodiment of the present invention shown in Fig.16, shows an excellent result in comparison with the conventional technique. In addition, the quantity of bits is restrained to a small value.

At this stage, it is possible to provide a providing medium such as a recording medium on which the coded data coded by the above-described iterated image transform coding devices are recorded.

Specifically, in the providing medium for providing image data coded by iterated transform coding, an input image is divided to generate first and second block images, and the feature quantities of the generated first and second block images are extracted. The second block image and the feature quantity of the second block image are stored into a memory, and a second block image having a feature quantity with a similarity degree not lower thin a predetermined level with respect to the feature quantity of a noted first block image is read out from the memory. Predetermined transform processing is carried out on the second block image read out from the memory, and a block image most approximate to the noted first block image is searched for from block images after transform on which predetermined transform processing has been carried out. Data indicating the block position of the block image most approximate to the noted first block image and a transform parameter indicating the predetermined transform processing are coded, and the coded data may be supplied to the providing medium.

Also, the above-described iterated image transform coding devices and iterated transform decoding devices can be realized by way of software, and a providing medium such as a recording medium on which a program for realizing these devices can be provided.

Specifically, there can be provided a providing medium for providing a program for carrying out iterated transform coding of an image, in which the program includes a step of dividing an input image to generate first and second block images, a step of extracting the feature quantities of the generated first and second block images, a step of storing the second block image and the feature quantity of the second block image into a memory, a step of reading out, from the memory, a second block image having a feature quantity with a similarity degree not lower than a predetermined level with respect to the feature quantity of a noted first block image, a step of carrying out predetermined transform processing on the second block image read out from the memory, a step of searching for a block image most approximate to the noted first block image from block images after transform on which predetermined transform processing has been carried out, and a step of coding data indicating the block position of the block image most approximate to the noted first block image and a transform parameter indicating the predetermined transform processing. Such program providing medium can be provided.

Also, in a providing medium for providing a program for carrying out iterated transform decoding of image data coded by iterated transform coding, the program includes a step of receiving coded data including data coded by iterated transform coding and constituted by block information indicating the block position and a transform parameter, a step of reproducing a transform source block on the basis of the block information, thus reproducing a block located at a predetermined position, a step of carrying out transform processing corresponding to the transform parameter on the reproduced block to generate a block image, and a step of repeating operation to reproduce the block and operation to carry out the transform processing for a predetermined number of times, thus outputting a ultimately generated decoded image.

As a matter of course, these programs can be supplied through a telephone line or a communication network as well as from the recording medium.

According to the present invention, an input image is divided to generate first and second block images, and the feature quantities of the generated first and second block images are extracted. The second block image and the feature quantity of the second block image are stored into a memory, and a second block image having a feature quantity with a similarity degree not lower than a predetermined level with respect to the feature quantity of a noted first block image is read out from the memory. Predetermined transform processing is carried out on the second block image read out from the memory, and a block image most approximate to the noted first block image is searched for from block images after transform on which predetermined transform processing has been carried out. Then, data indicating the block position of the block image most approximate to the noted first block image and a transform parameter indicating the predetermined transform processing are coded. Thus, by carrying out search with respect to only the block images having the feature quantity with a similarity degree not lower than the predetermined level with respect to the feature quantity of the first block image, from among all the second block images pre-stored in the image memory, search targets can be limited to a certain range and high-speed search can be realized. Therefore, the coding processing time, which is the problem in the conventional iterated transform coding, can be significantly reduced.

Also, by redividing the first block image and the second block image, redivision of the block image can be carried out in accordance with partial characteristics of the input image, and iterated transform coding can be carried out for each of the resultant subblock images. As a result, the quality of the coded image can be improved.

In addition, vector quantization is carried out on the first block image, and the most approximate block image obtained by search and the block image obtained by vector quantization are compared to select the block image more approximate to the first block image. Thus, even in the case where iterated transform coding provides only a coded image of low quality, the overall coding efficiency can be improved by combining vector quantization as a versatile technique with iterated transform coding and adaptively selecting these techniques.

Moreover, by providing the affine transformation section for carrying out a series of transform processing such as rotation, translation, expansion, and contraction in the image transforming and generating section, the processing system can be simplified and high-speed transform processing can be realized.

Also, by carrying out resolution conversion on the input image and dividing the resolution-converted image into first and second block images, processing for coding an image with a reduced resolution can be carried out at a high speed. In addition, since the block size can be set at a small value, the transform parameter of details of the image can be extracted.

Also, in iterated image transform decoding, the block selecting section is connected to the transform source block reproducing section so as to carry out decoding with respect to a specified block. Thus, in the case where only a specified area of the screen can be displayed or where it suffices to display only a specified area, decoding processing of the other blocks can be omitted. Therefore, the decoding processing time can be reduced and the memory capacity for storing and holding images can also be reduced.

In addition, the convergence degree of each block is constantly stored, and with respect to a block with a convergence degree that has reached a predetermined value, iterated processing for generating a decoded image is omitted. Thus, the overall decoding processing time can be reduced.

Also, since the resolution restoring section is provided on the stage preceding the transform source block reproducing section the quality of the decoded image can be improved by carrying out iterated transform decoding of the block with the restored resolution.

Industrial Applicability

Specific applications of the iterated image transform coding device and decoding device as described above are exemplified by a digital video disk, an image database, an image compressing/expanding unit for the purpose of down-loading images on the Internet, and a software module which realizes the same system.

**Claims**

1. An iterated image transform coding device for carrying out iterated transform coding of an image, comprising:

> a block generating section for dividing an input image into first and second block images;
> a feature quantity extracting section for extracting the feature quantities of the generated first and second block images;
> a memory for storing the second block image and the feature quantity thereof;
> a control section for carrying out control to read out, from the memory, a second block image having a feature quantity with a similarity degree not lower than a predetermined level with respect to the feature quantity of a noted first block image;

EP 0 921 686 A1

an image transforming and generating section for carrying out predetermined transform processing on the second block image read out from the memory;

an approximate block search section for searching for a block image most approximate to the noted first block image from block images after transform on which predetermined transform processing has been carried out; and

a coding section for coding data indicating the block position of the block image most approximate to the noted first block image and a transform parameter indicating the predetermined transform processing.

2. The iterated image transform coding device as claimed in claim 1, wherein the block generating section has a block redividing section for redividing the first block image and the second block images.

3. The iterated image transform coding device as claimed in claim 1, wherein the image transforming and generating section carries out transform processing including at least one of rotation, translation, and contraction.

4. The iterated image transform coding device as claimed in claim 1, further comprising:

a vector quantizing section for having the first block image inputted thereto and carrying out vector quantization on the first block image; and

a selecting section for comparing a block image obtained by the approximate block search section and a block image obtained by the vector quantizing section so as to select the block image more approximate to the first block image.

5. The iterated image transform coding device as claimed in claim 1, further comprising a resolution converting section for caring out resolution conversion on the input image, and supplying the resolution-converted image to the block generating section.

6. An iterated image transform coding method for carrying out iterated transform coding of an image, comprising the steps of:

dividing an input image to generate first and second block images;

extracting the feature quantities of the generated first and second block images;

storing the second block image and the feature quantity of the second block image into a memory;

reading out, from the memory, a second block image having a feature quantity with a similarity degree not lower than a predetermined level with respect to the feature quantity of a noted first block image;

carrying out predetermined transform processing on the second block image read out from the memory;

searching for a block image most approximate to the noted first block image from block images after transform on which predetermined transform processing has been carried out; and

coding data indicating the block position of the block image most approximate to the noted first block image and a transform parameter indicating the predetermined transform processing.

7. The iterated image transform coding method as claimed in claim 6, wherein the first block image and the second block images are redivided.

8. The iterated image transform coding method as claimed in claim 6, wherein transform processing including at least one of rotation, translation, and contraction is carried out on the second block image read out from the memory.

9. The iterated image transform coding method as claimed in claim 6, wherein vector quantization is carried out on the first block image, and

wherein the most approximate block image obtained by search and a block image obtained by vector quantization are compared with each other, thus selecting the block image more approximate to the first block image.

10. The iterated image transform coding method as claimed in claim 6, wherein resolution conversion is carried out on the input image, and wherein the resolution-converted image is divided into first and second block images.

11. An iterated image transform decoding device for carrying out iterated transform decoding of image data coded by iterated transform coding, the device comprising:

a receiving section for receiving coded data including data coded by iterated transform coding and constituted

18

by block information indicating the block position and a transform parameter;

a transform source block reproducing section for reproducing a transform source block on the basis of the block information, thus reproducing a block located at a predetermined position;

an image transforming and generating section for carrying out transform processing corresponding to the transform parameter on the reproduced block to generate a block image; and

a control section for carrying out control so as to repeat operation to reproduce the block and operation to carry out the transform processing for a predetermined number of times and output an ultimately generated decoded image.

12. The iterated image transform decoding device as claimed in claim 11, wherein the coded data further includes selection information indicating different coding systems and a quantization index,

the iterated image transform decoding device further comprising:
a de-quantizing section for decoding a block image corresponding to the quantization index with reference to a code book; and
an output section for selectively outputting the block image decoded by iterated transform decoding and the de-quantized block image on the basis of the selection information;
the memory storing the selectively outputted decoded block image.

13. The iterated image transform decoding device as claimed in claim 11, wherein the image transforming and generating section carries out transform processing including at least one of rotation, translation, and contraction with respect to the block image.

14. The iterated image transform decoding device as claimed in claim 11, further comprising a block selecting section for selecting a predetermined block from the reproduced blocks.

15. The iterated image transform decoding device as claimed in claim 11 , wherein the control section further carries out control, in an iterated transform decoding process, so as to find the convergence degree of the image for each block and end iterated transform decoding with respect a block having a convergence degree that has reached a predetermined convergence degree.

16. The iterated image transform decoding device as claimed in claim 11, further comprising a resolution restoring section for carrying out resolution restoration with respect to the data coded by iterated transform coding.

17. An iterated image transform decoding method for carrying out iterated transform decoding of image data coded by iterated transform coding, the method comprising the steps of:

receiving coded data including data coded by iterated transform coding and constituted by block information indicating the block position and a transform parameter;
reproducing a transform source block on the basis of the block information, thus reproducing a block located at a predetermined position;
carrying out transform processing corresponding to the transform parameter on the reproduced block to generate a block image; and
carrying out control so as to repeat operation to reproduce the block and operation to carry out the transform processing for a predetermined number of times and output an ultimately generated decoded image.

18. The iterated image transform decoding method as claimed in claim 17, wherein the coded data further includes selection information indicating different coding systems and a quantization index,

the method further comprising the steps of:
de-quantizing a block image corresponding to the quantization index with reference to a code book; and
selectively outputting the block image decoded by iterated transform decoding and the de-quantized block image on the basis of the selection information.

19. The iterated image transform decoding method as claimed in claim 17, wherein transform processing including at least one of rotation, translation, and contraction is carried out with respect to the block image.

20. The iterated image transform decoding method as claimed in claim 17, wherein a predetermined block is selected from the reproduced blocks and wherein iterated transform decoding carried out only with respect to the selected block.

21. The iterated image transform decoding method as claimed in claim 17, wherein in an iterated transform decoding process, the convergence degree of the image for each block is found, and wherein iterated transform decoding is ended with respect a block having a convergence degree that has reached a predetermined convergence degree.

22. The iterated image transform decoding method as claimed in claim 17, wherein resolution restoration is carried out with respect to the data coded by iterated transform coding.

23. A providing medium for providing image data coded by iterated transform coding, the providing medium being supplied with coded data is generated by:

dividing an input image to generate first and second block images;
extracting the feature quantities of the generated first and second block images;
storing the second block image and the feature quantity of the second block image into a memory;
reading out, from the memory, a second block image having a feature quantity with a similarity degree not lower than a predetermined level with respect to the feature quantity of a noted first block image;
carrying out predetermined transform processing on the second block image read out from the memory;
searching for a block image most approximate to the noted first block image from block images after transform on which predetermined transform processing has been carried out; and
coding data indicating the block position of the block image most approximate to the noted first block image and a transform parameter indicating the predetermined transform processing.

24. A providing medium for providing a program for carrying out iterated transform coding of an image, the program comprising:

a step of dividing an input image to generate first and second block images;
a step of extracting the feature quantities of the generated first and second block images;
a step of storing the second block image and the feature quantity of the second block image into a memory;
a step of reading out, from the memory, a second block image having a feature quantity with a similarity degree not lower than a predetermined level with respect to the feature quantity of a noted first block image;
a step of carrying out predetermined transform processing on the second block image read out from the memory;
a step of searching for a block image most approximate to the noted first block image from block images after transform on which predetermined transform processing has been carried out; and
a step of coding data indicating the block position of the block image most approximate to the noted first block image and a transform parameter indicating the predetermined transform processing.

25. A providing medium for providing a program for carrying out iterated transform decoding of image data coded by iterated transform coding, the program comprising:

a step of receiving coded data including data coded by iterated transform coding and constituted by block information indicating the block position and a transform parameter;
a step of reproducing a transform source block on the basis of the block information, thus reproducing a block located at a predetermined position;
a step of carrying out transform processing corresponding to the transform parameter on the reproduced block to generate a block image; and
a step of repeating operation to reproduce the block and operation to carry out the transform processing for a predetermined number of times, and outputting an ultimately generated decoded image.

*200*

*300* *301*

BLOCK
GENERATING
CIRCUIT

*201* *302*

APPROXIMATE
AREA SEARCH CIRCUIT

*304* *303*

ROTATION/
INVERSION/
LEVEL
CONVERSION
CIRCUIT ~*203*

*306*

*202*

CONTRACTED
IMAGE
GENERATING
CIRCUIT

*307*

*204* ~*305*

CONTRACTED
IMAGE STORAGE
CIRCUIT

# FIG.1

*302*

*205*

IFS CODE
STORAGE
CIRCUIT

*308*

*309*

*207*

*311*

*206* — IFS CODE
READING
CIRCUIT

DUPLICATION
CONTROL
CIRCUIT

*310*

*312*

*209*

*316*

*306* —

*304*

*208* — DECODED IMAGE
STORAGE CIRCUIT

*314*

*203* — ROTATION/INVERSION/
LEVEL CONVERSION
CIRCUIT

*303*

CONTRACTED
IMAGE
GENERATING
CIRCUIT

*305*

*202*

CONTRACTED IMAGE
STORAGE CIRCUIT

*315*

*204*

# FIG.2

FIG.3

FIG.4

# FIG.5

```
          ┌─────────┐
          │  START  │
          └────┬────┘
               ↓
   ┌───────────────────────────┐
   │   INPUT SIZE OF BLOCK      │──── S500
   │        = M × N             │
   └───────────┬───────────────┘
               ↓
   ┌───────────────────────────┐
   │   DIVIDE INTO k × k        │──── S501
   │       SUBBLOCKS            │
   └───────────┬───────────────┘
               ↓
   ┌───────────────────────────┐
   │ CALCULATE AVERAGE VALUE    │──── S502
   │  OF LUMINANCE FOR EACH     │
   │        SUBBLOCK            │
   └───────────┬───────────────┘
               ↓
   ┌───────────────────────────┐
   │  CALCULATE VECTOR DATA     │──── S503
   │ di (0 ≤ i ≤ k²-1) OF DOMAIN│
   └───────────┬───────────────┘
               ↓
   ┌───────────────────────────┐
   │ MULTIPLEX IMAGE POSITION   │
   │ INFORMATION OF THIS DOMAIN │──── S504
   │    AND di, AND STORE IN    │
   │       IMAGE MEMORY         │
   └───────────┬───────────────┘
               ↓
              ╱ ╲           ─ S505
            ╱     ╲
   NO     ╱  ABOVE  ╲
 ◄──────╱ PROCESSING  ╲
        ╲ COMPLETED   ╱
         ╲ WITH RESPECT╱
          ╲TO ALL     ╱
           ╲DOMAIN    ╱
            ╲BLOCKS?  ╱
             ╲   ╱
              ↓ YES
          ┌─────────┐
          │   END   │
          └─────────┘
```

# FIG.6

START

INPUT SIZE OF RANGE BLOCK = m × n — S510

DIVIDE INTO k × k SUBBLOCKS — S511

CALCULATE AVERAGE VALUE OF LUMINANCE FOR EACH SUBBLOCK — S512

CALCULATE VECTOR DATA $r_i$ $(0 \leqq i \leqq k^2-1)$ OF RANGE BLOCK — S513

EXTRACT ONLY DOMAIN HAVING $d_i$ THAT HOLDS $r_i = d_i$ (FOR ALL $i$ : $0 \leqq i \leqq k^2-1$) FROM IMAGE MEMORY — S514

MEASURE APPROXIMATION DEGREE BETWEEN ALL EXTRACTED DOMAINS AND CURRENT RANGE, AND ULTIMATELY SELECT MOST APPROXIMATE DOMAIN — S515

S516

NEXT RANGE BLOCK EXIST ? — YES

NO

END

# FIG.7

**FIG.8A**

**FIG.8B**

EP 0 921 686 A1

**FIG.9**

FIRST BLOCK GENERATING SECTION *1*

FIRST BLOCK REDIVIDING SECTION *30*

FIRST FEATURE QUANTITY EXTRACTING SECTION *5*

SECOND BLOCK GENERATING SECTION *2*

SECOND BLOCK REDIVIDING SECTION *31*

SECOND FEATURE QUANTITY EXTRACTING SECTION *6*

CONTROL SECTION *15*

IMAGE TRANSFORMING AND GENERATING SECTION *7*

IMAGE MEMORY SECTION *3*

APPROXIMATE BLOCK SEARCH SECTION *4*

CODING AND MULTIPLEXING SECTION *9*

*100* *101* *136* *103* *112*

*105* *107* *108* *20*

*110* *104*

*102* *137*

*106*

## FIG.10

**FIG.11**

EP 0 921 686 A1

**FIG.12**

**FIG.13**

- 100 (input)
- 1 FIRST BLOCK GENERATING SECTION
- 5 FIRST FEATURE QUANTITY EXTRACTING SECTION
- 11 VECTOR QUANTIZING SECTION
- 2 SECOND BLOCK GENERATING SECTION
- 6 SECOND FEATURE QUANTITY EXTRACTING SECTION
- 15 CONTROL SECTION
- 4 APPROXIMATE BLOCK SEARCH SECTION
- 7 IMAGE TRANSFORMING AND GENERATING SECTION
- 3 IMAGE MEMORY SECTION
- 8 CODE BOOK
- 10 SELECTING SECTION
- 9 CODING AND MULTIPLEXING SECTION
- 20

101, 105, 102, 106, 110, 107, 104, 133, 134, 103, 135, 130, 131, 108, 132, 112

FIG.14

**FIG.15**

EP 0 921 686 A1

EP 0 921 686 A1

**FIG.16**

**FIG.17**

**FIG.18**

EP 0 921 686 A1

EP 0 921 686 A1

**FIG.19**

**FIG.20**

EP 0 921 686 A1

START DECODING

S521 — PROCESS n-TH BLOCK

S522 — READ CONVERGENCE
DEGREE OF
CORRESPONDING BLOCK

S523 — MEASURE
CONVERGENCE DEGREE

S524
CARRY OUT
READING ?　　YES

NO

S525
PROCESSING
OF ALL BLOCKS
COMPLETED ?

NO

YES

END

S529
n++
(SHIFT TO NEXT BLOCK)

S528
n++
(SHIFT TO NEXT BLOCK)

REPRODUCE BLOCK BY
TRANSFORM SOURCE
BLOCK REPRODUCING
SECTION

S526

**FIG.21**

**FIG.22**

## INTERNATIONAL SEARCH REPORT

| | International application No. |
|---|---|
| | PCT/JP98/02755 |

**A. CLASSIFICATION OF SUBJECT MATTER**
Int.Cl$^6$ H04N7/30

According to International Patent Classification (IPC) or to both national classification and IPC

**B. FIELDS SEARCHED**

Minimum documentation searched (classification system followed by classification symbols)
Int.Cl$^6$ H04N7/24-7/68

Documentation searched other than minimum documentation to the extent that such documents are included in the fields searched
Jitsuyo Shinan Koho        1926-1998
Jitsuyo Shinan Kokai Koho   1971-1998

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP, 8-46962, A (NEC Corp.), 16 February, 1996 (16. 02. 96) (Family: none) | 1-25 |
| Y | JP, 9-84025, A (Sony Corp.), 28 March, 1997 (28. 03. 97) (Family: none) | 1-25 |
| Y | JP, 6-334868, A (Matsushita Electric Industrial Co., Ltd.), 2 December, 1994 (02. 12. 94) (Family: none) | 4, 9, 1 2, 18 |
| Y | JP, 9-130793, A (NEC Corp.), 16 May, 1997 (16. 05. 97) (Family: none) | 5, 10, 16, 22 |
| Y | JP, 9-23428, A (Minolta Co., Ltd.), 21 January, 1997 (21. 01. 97) (Family: none) | 11-22, 25 |
| Y | JP, 8-223581, A (NEC Corp.), 30 August, 1996 (30. 08. 96) & US, 5751363, A | 14, 20 |

☒ Further documents are listed in the continuation of Box C.        ☐ See patent family annex.

| * | Special categories of cited documents: | "T" | later document published after the international filing date or priority |
|---|---|---|---|
| "A" | document defining the general state of the art which is not considered to be of particular relevance | | date and not in conflict with the application but cited to understand the principle or theory underlying the invention |
| "E" | earlier document but published on or after the international filing date | "X" | document of particular relevance; the claimed invention cannot be |
| "L" | document which may throw doubts on priority claim(s) or which is cited to establish the publication date of another citation or other special reason (as specified) | | considered novel or cannot be considered to involve an inventive step when the document is taken alone |
| "O" | document referring to an oral disclosure, use, exhibition or other means | "Y" | document of particular relevance; the claimed invention cannot be considered to involve an inventive step when the document is combined with one or more other such documents, such combination |
| "P" | document published prior to the international filing date but later than the priority date claimed | "&" | being obvious to a person skilled in the art document member of the same patent family |

| Date of the actual completion of the international search | Date of mailing of the international search report |
|---|---|
| 21 August, 1998 (21. 08. 98) | 1 September, 1998 (01. 09. 98) |

| Name and mailing address of the ISA/ | Authorized officer |
|---|---|
| Japanese Patent Office | |
| Facsimile No. | Telephone No. |

Form PCT/ISA/210 (second sheet) (July 1992)

**INTERNATIONAL SEARCH REPORT**

| | International application No. |
|---|---|
| | PCT/JP98/02755 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP, 7-322255, A  (Sony Corp.),<br>8 December, 1995 (08. 12. 95)  (Family: none) | 1-25 |
| A | JP, 8-223578, A  (Nippon Telegraph & Telephone Corp.),<br>30 August, 1996 (30. 08. 96)  (Family: none) | 1-25 |
| A | JP, 9-18877, A  (Minolta Co., Ltd.),<br>17 January, 1997 (17. 01. 97)  (Family: none) | 1-25 |
| A | JP, 2-190080, A  (Fujitsu Ltd.),<br>26 July, 1990 (26. 07. 90)  (Family: none) | 14, 20 |
| P | JP, 9-275565, A  (Kokusai Electric Co., Ltd.),<br>21 October, 1997 (21. 10. 97)  (Family: none) | 1-25 |

Form PCT/ISA/210 (continuation of second sheet) (July 1992)